(19) Europäisches Patentamt

European Patent Office

Office européen des brevets

(11) **EP 3 043 483 B1**

## (12) EUROPEAN PATENT SPECIFICATION

(45) Date of publication and mention
of the grant of the patent:
**01.01.2020 Bulletin 2020/01**

(21) Application number: **13897204.7**

(22) Date of filing: **07.11.2013**

(51) Int Cl.:
*H04B 1/12* *(2006.01)*     *H04B 3/23* *(2006.01)*

(86) International application number:
**PCT/CN2013/086706**

(87) International publication number:
**WO 2015/066874 (14.05.2015 Gazette 2015/19)**

(54) **SELF-INTERFERENCE CANCELLATION METHOD AND DEVICE**

VERFAHREN UND VORRICHTUNG ZUR SELBSTINTERFERENZUNTERDRÜCKUNG

PROCÉDÉ ET DISPOSITIF D'ANNULATION D'AUTOBROUILLAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.07.2016 Bulletin 2016/28**

(73) Proprietor: **Huawei Technologies Co., Ltd.
Longgang District
Shenzhen, Guangdong 518129 (CN)**

(72) Inventors:
• **LIU, Sheng
Shenzhen
Guangdong 518129 (CN)**

• **YU, Rongdao
Shenzhen
Guangdong 518129 (CN)**

(74) Representative: **Epping - Hermann - Fischer
Patentanwaltsgesellschaft mbH
Schloßschmidstraße 5
80639 München (DE)**

(56) References cited:
**CN-A- 101 425 823     CN-A- 103 190 090
CN-U- 202 362 811     CN-U- 202 362 811
CN-U- 202 472 702     CN-U- 202 472 702
US-A1- 2009 227 213     US-A1- 2012 052 892**

EP 3 043 483 B1

**Description**

**Field of the Technology**

The present application relates to the field of communication, and particularly to a self-interference cancellation method and device

**Background**

In a wireless communication system such as a cellular mobile communication system, WLAN (Wireless Local Area Network, wireless local area network), and FWA (Fixed Wireless Access, fixed wireless access), a communication node like a BS (Base Station, base station), an AP(Access Point, access point), an RS(Relay Station, relay station), and a UE(User Equipment, user equipment) generally has ability to transmit a signal of itself and receive signals from other communication nodes. Due to great attenuation of wireless signals in the wireless channel, a signal from a correspondent node becomes very weak when arriving at a receiving end as compared to a signal transmitted by itself, for example, a power difference between a received signal and a transmitting signal at a node in the cellular mobile communication system reaches 80dB~140dB or even larger. Thus, to avoid the self-interference exerted by the transmitting signal on the received signal at a same transceiver, the transmitting and receiving of the wireless signals are usually performed at different frequency bands or different time periods to distinguish from each other. For example, in FDD (Frequency Division Duplex, frequency division duplex), transmitting and receiving are performed at different frequency bands spaced by a certain guard band, while in TDD (Time Division Duplex, time division duplex), transmitting and receiving are performed at different time periods spaced by a certain guard period. The guard band in an FDD system and the guard period in a TDD system are both for sufficient isolation between the receiving and transmitting, and avoid the case that the transmitting interferes with the receiving.

Different from conventional FDD or TDD technology, the wireless full-duplex technology may receive and transmit over a same wireless channel simultaneously, thus spectral efficiency of the wireless full-duplex technology is twice that of FDD or TDD technology. Apparently, a premise to realize the wireless full-duplex is to avoid, reduce and cancel strong interference (referred to as self-interference, self-interference) exerted by he transmitting signal on the received signal at the same transceiver as much as possible, so that the self-interference does not influence correct receiving of useful signals.

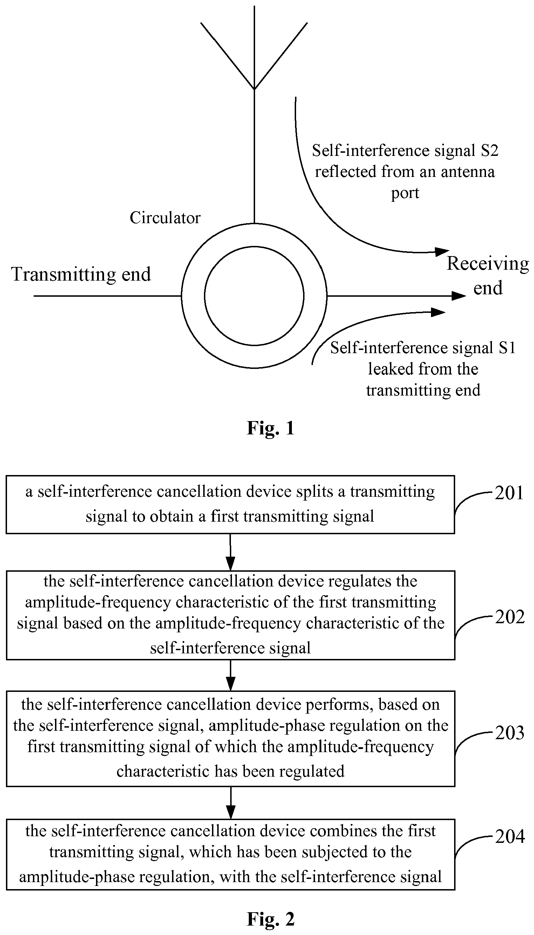

Referring to Fig. 1, when the signal is transmitted through an antenna, besides a self-interference signal (power of this signal is usually much lower than power of a self-interference signal in a main path) which is radiated into space through the antenna and re-enters the receiving end through being reflected from a scatterer, self-interference signals in the main path which enter the receiving end further include two interference signals: a self-interference signal S1 leaked from the transmitting end to the receiving end due to isolation limit (usually 20~30dB) of a transmitting-receiving isolation device such as a circulator, and a self-interference signal S2 which is reflected from an antenna port to the receiving end. Though a VSWR (Voltage Standing Wave Ratio, voltage standing wave ratio) or a reflection coefficient of the antenna in an operation bandwidth changes little, a phase of the antenna varies drastically with antenna impedance. In this case, the self-interference signal reflected from the antenna port cannot be cancelled with the conventional technology.

In US 2009/0227213, a compensation circuit for suppressing the crosstalk between a transmission path and a reception path of an RFID-reader unit is provided, which includes a device for coupling out a signal portion of a carrier signal from the transmission path into a compensation path, the compensation path having at least one variable phase shifter and at least one variable attenuator for varying the signal portion in the phase and in the amplitude respectively, a device for coupling in the signal portion varied in the phase and in the amplitude from the compensation path into the reception path, a unit for determining the crosstalk existing in the reception path and a control unit for the variable phase shifter and the variable attenuator, which is in signal connection with the unit for determining the existing crosstalk.

In US 2012/0052892, a system and method for canceling transmission leakage signals in a wide bandwidth distributed antenna system having remote unit is provided. An internal cancellation circuit within the remote unit is employed to reduce the transmitted leakage signals by generating a cancellation signal. This cancellation signal is added to the received signal to cancel the transmission leakage signal in the receiving signal path.

**Summary**

The present invention is defined by the features of the appended claims. A self-interference cancellation method and a device thereof are provided according to embodiments of the invention. A difficulty to cancel a self-interference signal of which a phase varies drastically is avoided.

For the above purpose, the following technical solutions are adopted according to the embodiments of the invention.

In a first aspect, a self-interference cancellation device includes a port network, a first amplitude-phase regulator, a first splitter, and a first combiner.

An output port of the first splitter is connected to an input port of the port network, an input port of the first amplitude-phase regulator is connected to an output port of the port network, and an input port of the first combiner is connected to an output port of the first amplitude-phase regulator;
the first splitter is configured to split a transmitting signal to obtain a first transmitting signal;
the port network is configured to regulate, based on an amplitude-frequency characteristic of a self-interference signal, an amplitude-frequency characteristic of the first transmitting signal out of the first splitter;
the first amplitude-phase regulator is configured to perform, based on the self-interference signal, amplitude-phase regulation on the first transmitting signal of which the amplitude-frequency characteristic has been regulated;
the first combiner is configured to combine the self-interference signal with the first transmitting signal which has been subjected to the amplitude-phase regulation performed by the first amplitude-phase regulator.

Combining with the first aspect, in a first possible implementation,
the port network is specifically configured to regulate, based on the amplitude-frequency characteristic of the self-interference signal, the amplitude-frequency characteristic of the first transmitting signal, so that the amplitude-frequency characteristic of the first transmitting signal is identical to that of the self-interference signal.

Combining with the first aspect, in a second possible implementation,
the first amplitude-phase regulator includes a first attenuator and a first phase shifter, wherein an output port of the first attenuator is connected to an input port of the first phase shifter;
the first attenuator is configured to attenuate the first transmitting signal of which the amplitude-frequency characteristic has been regulated by the port network, so that the amplitude of the attenuated first transmitting signal is identical to that of the self-interference signal; and
the first phase shifter is configured to perform phase-shift on the first transmitting signal which has been attenuated by the first attenuator, so that a phase of the phase-shifted first transmitting signal is inverse to that of the self-interference signal.

Combining with the first aspect, in a third possible implementation,
the first amplitude-phase regulator includes a first phase shifter and a first attenuator, wherein an output port of the first phase shifter is connected to an input port of the first attenuator;
the first phase shifter is configured to perform the phase-shift on the first transmitting signal of which the amplitude-frequency characteristic has been regulated by the port network, so that a phase of the phase-shifted first transmitting signal is inverse to that of the self-interference signal; and
the first attenuator is configured to attenuate the first transmitting signal which has been phase-shifted by the first phase shifter, so that an amplitude of the attenuated first transmitting signal is identical to that of the self-interference signal.

Combining with the first aspect or the first possible implementation in the first aspect, in a fourth possible implementation,
the port network includes at least one resistor inductor capacitor RLC circuit, wherein in case that number of the RLC circuits is larger than or equal to two, the RLC circuits are connected in series, the at least one RLC circuit includes at least one resistor, at least one capacitor, and at least one inductor, and the at least one resistor, the at least one capacitor, and the at least one inductor are connected in parallel and
the port network is specifically configured to regulate, based on the amplitude-frequency characteristic of the self-interference signal, a phase of the first transmitting signal through the at least one RLC circuit.

Combining with the first aspect or the first possible implementation in the first aspect, in a fifth possible implementation,
the port network includes a second branch splitter, a branch combiner, a second branch delayer, a second branch attenuator, a third branch splitter, a third branch delayer and a third branch attenuator;
an output port of the second branch splitter is connected to an input port of the second branch delayer, the output port of the second branch splitter is connected to an input port of the branch combiner, an output port of the second branch delayer is connected to an input port of the second branch attenuator, an output port of the second branch attenuator is connected to an input port of the branch combiner, an input port of the third branch splitter is connected to an output port of the branch combiner, an output port of the third branch splitter is connected to an input port of the third branch delayer, an output port of the third branch delayer is connected to an input port of the third branch attenuator, and an output port of the third branch attenuator is connected to an input port of the branch combiner;
the second branch splitter is configured to split the first transmitting signal into a first branch signal and a second branch signal;
the second branch delayer is configured to delay, based on a preset second branch delay factor, the second branch signal out of the second branch splitter, wherein the preset second branch delay factor is set based on the self-interference signal;
the second branch attenuator is configured to attenuate, based on a preset second branch attenuation factor, the second branch signal which has been delayed by the second branch delayer, wherein the preset second branch attenuation factor is set based on the self-interference signal;
the branch combiner is configured to combine the first branch signal out of the second branch splitter and the second branch signal which has been attenuated by the second branch attenuator into a fourth branch signal;
the third branch splitter is configured to split the fourth branch signal combined by the branch combiner to obtain a third branch signal;

the third branch delayer is configured to delay, based on a preset third branch delay factor, the third branch signal out of the third branch splitter, wherein the preset third branch delay factor is set based on the self-interference signal;

the third branch attenuator is configured to attenuate, based on a preset third branch attenuation factor, the third branch signal which has been delayed by the third branch delayer, wherein the preset third branch attenuation factor is set based on the self-interference signal;

the branch combiner is further configured to combine the third branch signal which has been attenuated by the third branch attenuator into the fourth branch signal, and transmit the fourth branch signal as the first transmitting signal of which the amplitude-frequency characteristic has been regulated; and

a transmission direction of the second branch signal is opposite to that of the first branch signal, the transmission directions of the first branch signal, the third branch signal and the fourth branch signal are the same as that of the first transmitting signal.

Combining with the fifth possible implementation in the first aspect, in a sixth possible implementation, the port network may further includes a fifth branch splitter, a fifth branch delayer, a fifth branch attenuator, a sixth branch splitter, a sixth branch delayer and a sixth branch attenuator;

an input port of the fifth branch splitter is connected to an output port of the second branch delayer, an output port of the fifth branch splitter is connected to an input port of the second branch attenuator, the second branch attenuator is connected to the second branch delayer through the fifth branch splitter, the output port of the fifth branch splitter is connected to an input port of the fifth branch delayer, an output port of the fifth branch delayer is connected to an input port of the fifth branch attenuator, an output port of the fifth branch attenuator is connected to the input port of the branch combiner, an input port of the sixth branch splitter is connected to an output port of the third branch delayer, an output port of the sixth branch splitter is connected to an input port of the third branch attenuator, the third branch attenuator is connected to the third branch delayer through the sixth branch splitter, the output port of the sixth branch splitter is connected to an input port of the sixth branch delayer, an output port of sixth branch delayer is connected to an input port of the sixth branch attenuator, and an output port of the sixth branch attenuator is connected to an input port of the branch combiner;

the fifth branch splitter is configured to split the second branch signal which has been delayed by the second branch delayer, to obtain a fifth branch signal;

the fifth branch delayer is configured to delay, based on a preset fifth branch delay factor, the fifth branch signal out of the fifth branch splitter, wherein the preset fifth branch delay factor is set based on the self-interference signal;

the fifth branch attenuator is configured to attenuate, based on a preset fifth branch attenuation factor, the fifth branch signal which has been delayed by the fifth branch delayer, wherein the preset fifth branch attenuation factor is set based on the self-interference signal;

the branch combiner is further configured to combine the first branch signal out of the second branch splitter, the fifth branch signal which has been attenuated by the fifth branch attenuator, and the second branch signal which has been attenuated by the second branch attenuator into the fourth branch signal;

the sixth branch splitter is configured to split the third branch signal which has been delayed by the third branch delayer, to obtain a sixth branch signal;

the sixth branch delayer is configured to delay, based on a preset sixth branch delay factor, the sixth branch signal out of the sixth branch splitter, wherein the preset sixth branch delay factor is set based on the self-interference signal;

the sixth branch attenuator is configured to attenuate, based on a preset sixth branch attenuation factor, the sixth branch signal which has been delayed by the sixth branch delayer, wherein the preset sixth branch attenuation factor is set based on the self-interference signal;

the branch combiner is further configured to combine the third branch signal which has been attenuated by the third branch attenuator, and the sixth branch signal which has been attenuated by the sixth branch attenuator into the fourth branch signal; and

a transmission direction of the fifth branch signal is the same as that of the second branch signal, and the transmission direction of the sixth branch signal is the same as that of the third branch signal.

Combining with the fifth possible implementation in the first aspect, in a seventh possible implementation, the port network further includes a first branch attenuator; where

an input port of the first branch attenuator is connected to an output port of the second branch splitter, an output port of the first branch attenuator is connected to an input port of the branch combiner, and the branch combiner is connected to the second branch splitter through the first branch attenuator; and

the first branch attenuator is configured to attenuate, based on a preset first branch attenuation factor, the first branch signal, wherein the preset first branch attenuation factor is set based on the self-interference signal.

Combining with the fifth possible implementation in the first aspect, in a eighth possible implementation, the port network further includes a fourth branch attenuator; where

an input port of the fourth branch attenuator is connected to an output port of the branch combiner, an output port of the fourth branch attenuator is connected to an input port of the third branch splitter, and the branch combiner is connected to the third branch splitter through the fourth branch attenuator; and

the fourth branch attenuator is configured to attenuate, based on a preset fourth branch attenuation factor, the fourth branch signal, wherein the preset fourth branch attenuation factor is set based on the self-interference signal.

Combining any implementation from the first aspect to the eighth possible implementation in the first aspect, in a ninth possible implementation, the self-interference cancellation device further includes a second splitter, a second amplitude-phase regulator and a second combiner; where

an input port of the second splitter is connected to an output port of the first splitter, an output port of the second splitter is connected to an input port of the port network and an input port of the second amplitude-phase regulator, an output port of the second amplitude-phase regulator is connected to an input port of the second combiner, an output port of the first amplitude-phase regulator is connected to an input port of the second combiner, and an output port of the second combiner is connected to an input port of the first combiner;

the second splitter is configured to split the first transmitting signal to obtain at least one second transmitting signal;

the second amplitude-phase regulator is configured to perform the amplitude-phase regulation on the second transmitting signal out of the second splitter; and

the second combiner is configured to combine the second transmitting signal, which has been subjected to the amplitude-phase regulation performed by the second amplitude-phase regulator, into the first transmitting signal which has been subjected to the amplitude-phase regulation.

Combining with the ninth possible implementation in the first aspect, in a tenth possible implementation, the second amplitude-phase regulator includes a second attenuator and a second phase shifter, and an output port of the second attenuator is connected to an input port of the second phase shifter;

the second attenuator is configured to attenuate the second transmitting signal out of the second splitter, so that an amplitude of the attenuated second transmitting signal reaches a preset amplitude; and

the second phase shifter is configured to perform the phase-shift on the second transmitting signal which has been attenuated by the second attenuator, so that a phase of the phase-shifted second transmitting signal reaches a preset phase.

Combining with the ninth possible implementation in the first aspect, in a eleventh possible implementation,

the second amplitude-phase regulator includes a second phase shifter and a second attenuator, and an output port of the second phase shifter is connected to an input port of the second attenuator;

the second phase shifter is configured to perform the phase-shift on the second transmitting signal out of the second splitter, so that a phase of the phase-shifted second transmitting signal reaches a preset phase; and

the second attenuator is configured to attenuate the second transmitting signal which has been phase-shifted by the second phase shifter, so that an amplitude of the attenuated second transmitting signal reaches a preset amplitude.

In a second aspect, a self-interference cancellation device includes a processor, a storage, and a bus, wherein the processor is connected to the storage through the bus, and the storage is configured to store program codes for being executed by the processor; and where

the processor is configured to split a transmitting signal to obtain a first transmitting signal, regulate an amplitude-frequency characteristic of the first transmitting signal based on an amplitude-frequency characteristic of a self-interference signal, wherein the self-interference signal is an interference signal generated due to the transmitting signal being reflected, perform, based on the self-interference signal, amplitude-phase regulation on the first transmitting signal of which the amplitude-frequency characteristic has been regulated, and combine the self-interference signal with the first transmitting signal which has been subjected to the amplitude-phase regulation.

Combining with the second aspect, in a first possible implementation,

the processor is specifically configured to regulate the amplitude-frequency characteristic of the first transmitting signal based on the amplitude-frequency characteristic of the self-interference signal, so that the amplitude-frequency characteristic of the first transmitting signal is identical to that of the self-interference signal.

Combining with the second aspect, in a second possible implementation,

the processor is specifically configured to attenuate the first transmitting signal of which the amplitude-frequency characteristic has been regulated, so that an amplitude of the attenuated first transmitting signal is identical to that of the self-interference signal, and perform phase-shift on the attenuated first transmitting signal, so that a phase of the phase-shifted first transmitting signal is inverse to that of the self-interference signal.

Combining with the second aspect, in a third possible implementation,

the processor is specifically configured to perform phase-shift on the first transmitting signal of which the amplitude-frequency characteristic has been regulated, so that the phase of the phase-shifted first transmitting signal is inverse to that of the self-interference signal, and attenuate the phase-shifted first transmitting signal, so that the amplitude of the attenuated first transmitting signal is identical to that of the self-interference signal.

Combining with the second aspect or the first possible implementation in the second aspect, in a fourth possible implementation,

the processor is specifically configured to regulate, based on the amplitude-frequency characteristic of the self-interference signal, a phase of the first transmitting signal through at least one resistor inductor capacitor RLC circuit, wherein in case that number of the RLC circuits is larger than or equal to two, the RLC circuits are connected in series.

Combining with the second aspect or the first possible implementation in the second aspect, in a fifth possible implementation,

the processor is specifically configured to split the first transmitting signal into a first branch signal and a second branch signal;

delay the second branch signal based on a preset second branch delay factor, and attenuate the delayed second branch signal based on a preset second branch attenuation factor, wherein the preset second branch delay factor and the preset second branch attenuation factor are set based on the self-interference signal; and

combine the first branch signal and the attenuated second branch signal into a fourth branch signal.

The processor is further configured to split the fourth branch signal to obtain a third branch signal, delay the third branch signal based on a preset third branch delay factor, and attenuate the delayed third branch signal based on a preset third branch attenuation factor, wherein the preset third branch delay factor and the preset third branch attenuation factor are set based on the self-interference signal; and

combine the attenuated third branch signal into the fourth branch signal, and output the fourth branch signal as the first transmitting signal of which the amplitude-frequency characteristic has been regulated; where

a transmission direction of the second branch signal is opposite to that of the first branch signal, the transmission directions of the first branch signal, the third branch signal and the fourth branch signal are the same as that of the first transmitting signal.

Combining with the fifth possible implementation in the second aspect, in a sixth possible implementation,

the processor is further configured to split the delayed second branch signal to obtain a fifth branch signal;

delay the fifth branch signal based on a preset fifth branch delay factor, and attenuate the delayed fifth branch signal based on a preset fifth branch attenuation factor, wherein the preset fifth branch delay factor and the preset fifth branch attenuation factor are set based on the self-interference signal; and

combine the first branch signal, the attenuated fifth branch signal, and the attenuated second branch signal into the fourth branch signal.

The processor is further configured to split the delayed third branch signal to obtain a sixth branch signal, delay the sixth branch signal based on a preset sixth branch delay factor, and attenuate the delayed sixth branch signal based on a preset sixth branch attenuation factor, wherein the preset sixth branch delay factor and the preset sixth branch attenuation factor are set based on the self-interference signal; and

combine the attenuated third branch signal and the attenuated sixth branch signal into the fourth branch signal; where

a transmission direction of the fifth branch signal is the same as that of the second branch signal, and the transmission direction of the sixth branch signal is the same as that of the third branch signal.

Combining with the fifth possible implementation in the second aspect, in a seventh possible implementation,

the processor is further configured to attenuate the first branch signal based on a preset first branch attenuation factor, wherein the preset first branch attenuation factor is set based on the self-interference signal.

Combining with the fifth possible implementation in the second aspect, in a eighth possible implementation,

the processor is further configured to attenuate the fourth branch signal based on a preset fourth branch attenuation factor, wherein the preset fourth branch attenuation factor is set based on the self-interference signal.

Combining any implementation from the second aspect to the eighth possible implementation in the second aspect, in a ninth possible implementation,

the processor is further configured to split the first transmitting signal to obtain at least one second transmitting signal, perform an amplitude-phase regulation on the second transmitting signal, and combine the second transmitting signal, which has been subjected to the amplitude-phase regulation, into the first transmitting signal which has been subjected to the amplitude-phase regulation.

Combining with the ninth possible implementation in the second aspect, in a tenth possible implementation,

the processor is specifically configured to attenuate the second transmitting signal, so that an amplitude of the attenuated second transmitting signal reaches a preset amplitude, and perform phase-shift on the attenuated second transmitting signal, so that a phase of the phase-shifted second transmitting signal reaches a preset phase.

Combining with the ninth possible implementation in the second aspect, in a tenth possible implementation,

the processor is specifically configured to attenuate the second transmitting signal, so that an amplitude of the attenuated second transmitting signal reaches a preset amplitude, and perform phase-shift on the attenuated second transmitting signal, so that a phase of the phase-shifted second transmitting signal reaches a preset phase.

Combining with the ninth possible implementation in the second aspect, in a eleventh possible implementation,

the processor is specifically configured to perform phase-shift on the second transmitting signal, so that a phase of the phase-shifted second transmitting signal reaches a preset phase, and attenuate the phase-shifted second transmitting signal, so that an amplitude of the attenuated second transmitting signal reaches a preset amplitude.

In a third aspect, a self-interference cancellation method includes:

splitting a transmitting signal to obtain a first transmitting signal;

regulating an amplitude-frequency characteristic of the first transmitting signal based on the amplitude-frequency characteristic of a self-interference signal, wherein the self-interference signal includes an interference signal which is generated due to the transmitting signal being from an antenna port;

performing, based on the self-interference signal, amplitude-phase regulation on the first transmitting signal of which the amplitude-frequency characteristic has been regulated; and

combining the first transmitting signal, which has been subjected to the amplitude-phase regulation, with the self-interference signal.

Combining with the third aspect, in a first possible implementation, the regulating the amplitude-frequency characteristic of the first transmitting signal based on the amplitude-frequency characteristic of the self-interference signal includes:
regulating the amplitude-frequency characteristic of the first transmitting signal based on the amplitude-frequency characteristic of the self-interference signal, so that the amplitude-frequency characteristic of the first transmitting signal is identical to the amplitude-frequency characteristic of the self-interference signal.

Combining with the third aspect, in a second possible implementation, the performing, based on the self-interference signal, amplitude-phase regulation on the first transmitting signal of which the amplitude-frequency characteristic has been regulated, includes:

attenuating the first transmitting signal of which the amplitude-frequency characteristic has been regulated, so that an amplitude of the attenuated first transmitting signal is identical to that of the self-interference signal; and

phase-shifting the attenuated first transmitting signal, so that a phase of the phase-shifted first transmitting signal is inverse to that of the self-interference signal.

Combining with the third aspect, in a third possible implementation, the performing, based on the self-interference signal, amplitude-phase regulation on a first transmitting signal of which the amplitude-frequency characteristic has been regulated, includes:

phase-shifting the first transmitting signal of which the amplitude-frequency characteristic has been regulated, so that a phase of the phase-shifted first transmitting signal is inverse to that of the self-interference signal; and

attenuating the phase-shifted first transmitting signal, so that an amplitude of the attenuated first transmitting signal is identical to that of the self-interference signal.

Combining with the third aspect or the first possible implementation in the third aspect, in a fourth possible implementation, the regulating the amplitude-frequency characteristic of the first transmitting signal based on the amplitude-frequency characteristic of the self-interference signal includes:
regulating, based on the amplitude-frequency characteristic of the self-interference signal, a phase of the first transmitting signal through at least one resistor inductor capacitor RLC circuit, wherein in case that number of the RLC circuits is larger than or equal to two, the RLC circuits are connected in series.

Combining with the third aspect or the first possible implementation in the third aspect, in a fifth possible implementation, the regulating the amplitude-frequency characteristic of the first transmitting signal based on the amplitude-frequency characteristic of the self-interference signal includes:

splitting the first transmitting signal into a first branch signal and a second branch signal;

delaying the second branch signal based on a preset second branch delay factor, and attenuating the delayed second branch signal based on a preset second branch attenuation factor, wherein the preset second branch delay factor and the preset second branch attenuation factor are set based on the self-interference signal;

Combining with the first branch signal and the attenuated second branch signal into a fourth branch signal;
splitting the fourth branch signal to obtain a third branch signal;
delaying the third branch signal based on a preset third branch delay factor, and attenuating the delayed third branch signal based on a preset third branch attenuation factor, wherein the preset third branch delay factor and the preset third branch attenuation factor are set based on the self-interference signal;
combining the attenuated third branch signal into the fourth branch signal; and
outputting the fourth branch signal as the first transmitting signal of which the amplitude-frequency characteristic has been regulated; where
a transmission direction of the second branch signal is opposite to that of the first branch signal, transmission directions of the first branch signal, the third branch signal and the fourth branch signal are the same as that of the first transmitting signal.

Combining with the fifth possible implementation in the third aspect, in a sixth possible implementation, after the delaying the second branch signal based on the preset second branch delay factor, the method further includes:

splitting the delayed second branch signal to obtain a fifth branch signal;

delaying the fifth branch signal based on a preset fifth branch delay factor, and attenuating the delayed fifth branch signal based on a preset fifth branch attenuation factor, where the preset fifth branch delay factor and the preset fifth branch attenuation factor are set based on the self-interference signal.

The combining the first branch signal and the attenuated second branch signal into the fourth branch signal includes:
combining the first branch signal, the delayed fifth branch signal and the attenuated second branch signal into the fourth branch signal.

After the delaying the third branch signal based on the preset third branch delay factor, the method further includes:

splitting the delayed third branch signal to obtain a sixth branch signal; and

delaying the sixth branch signal based on a preset sixth branch delay factor, and attenuating the delayed sixth branch signal based on a preset sixth branch attenuation factor, wherein the sixth branch delay factor and the sixth branch attenuation factor are set based on the self-interference signal.

The combining the attenuated third branch signal into the fourth branch signal includes:

combining the attenuated third branch signal and the attenuated sixth branch signal into the fourth branch signal; where

a transmission direction of the fifth branch signal is the same as that of the second branch signal, a transmission direction of the sixth branch signal is the same as that of the third branch signal.

Combining with the fifth possible implementation in the third aspect, in a seventh possible implementation, the method further includes:
attenuating the first branch signal based on a preset first branch attenuation factor, wherein the first branch attenuation factor is set based on the self-interference signal.

Combining with the fifth possible implementation in the third aspect, in a eighth possible implementation, the method further includes:

attenuating the fourth branch signal based on a preset fourth branch attenuation factor, wherein the fourth branch attenuation factor is set based on the self-interference signal.

Combining any implementation from the third aspect to the eighth possible implementation in the third aspect, in a ninth possible implementation,

the self-interference signal further includes a signal leaked by the transmitting signal at a transmitting end; and

the method further includes:

splitting at least one second transmitting signal from the first transmitting signal;

performing the amplitude-phase regulation on the second transmitting signal; and

combining the second transmitting signal, which has been subjected to the amplitude-phase regulation, into the first transmitting signal, which has been subjected to the amplitude-phase regulation, to cancel the signal leaked by the transmitting signal at a leaking port.

Combining with the ninth possible implementation in the third aspect, in a tenth possible implementation, the performing the amplitude-phase regulation on the second transmitting signal includes:

attenuating the second transmitting signal, so that an amplitude of the attenuated second transmitting signal reaches a preset amplitude; and

performing the phase-shift on the attenuated second transmitting signal, so that a phase of the phase-shifted second transmitting signal reaches a preset phase.

Combining with the ninth possible implementation in the third aspect, in a eleventh possible implementation, the performing the amplitude-phase regulation on the second transmitting signal includes:

performing the phase-shift on the second transmitting signal, so that a phase of the phase-shifted second transmitting signal reaches a preset phase; and

attenuating the phase-shifted second transmitting signal, so that an amplitude of the attenuated second transmitting signal reaches a preset amplitude.

In the self-interference cancellation method and the device thereof provided according to the embodiments of the invention, the first transmitting signal is obtained by splitting the transmitting signal, the amplitude-frequency characteristic of the first transmitting signal is regulated based on the amplitude-frequency characteristic of the self-interference signal, and amplitude-phase regulation is performed on the first transmitting signal of which the amplitude-frequency characteristic has been regulated, in order to cancel the self-interference signal. A difficulty to cancel the self-interference signal of which the phase varies drastically is avoided, and an influence on a received signal caused by the self-interference signal is lowered.

**Brief Description of the Drawings**

To illustrate the embodiments of the invention and technical solutions in conventional technology more clearly, drawings needed in the description of the embodiments and the conventional technology will be introduced briefly hereinafter.

Fig. 1 is a diagram of a self-interference signal provided in conventional technology;

Fig. 2 is a diagram of a self-interference cancellation method provided in an embodiment of the invention;

Fig. 3 is a structural diagram of a self-interference cancellation method provided in another embodiment of the invention;

Fig. 4 is a structural diagram of a self-interference cancellation device provided in an embodiment of the invention;

Fig. 5 is a structural diagram of a self-interference cancellation device provided in another embodiment of the invention;

Fig. 6 is a diagram of signal response in a port network provided in an embodiment of the invention;

Fig. 7 is a structural diagram of a port network provided in an embodiment of the invention;

Fig. 8 is a structural diagram of a port network provided in another embodiment of the invention; and

Fig. 9 is a structural diagram of a self-interference cancellation device provided in another embodiment of the invention.

References in the drawings:

41- port network;

42- first amplitude-phase regulator;

43- first combiner;

44- first splitter;

45- second splitter;

46- second amplitude-phase regulator;

47- second combiner;

421- first attenuator;

422- first phase shifter;

461- second attenuator;

462- second phase shifter;

4101- branch combiner;

4102- second branch splitter;

4103- second branch delayer;

4104- second branch attenuator;

4105- third branch delayer;

4106- third branch attenuator;

4107- third branch splitter;

4108- first branch attenuator;

4109- fourth branch attenuator;

4110- fifth branch delayer;

4111- fifth branch attenuator;

4112- sixth branch delayer;

4113- sixth branch attenuator;

4114- fifth branch splitter;

4115- sixth branch splitter.

**Detailed Description of the Embodiments**

The technical solution according to the embodiments of the disclosure is further described in conjunction with the drawings hereinafter. Apparently, the described embodiments are just a few rather than all of the embodiments of the disclosure.

Narrow-band antennas are usually used in conventional wireless communication, reflection from the antennas themselves induces great interference, and equivalent impedance of the antennas vary with frequency, thus a phase of a self-interference signal reflected from an antenna port varies drastically, and it is difficult for the conventional technology to align a phase of a signal in a cancellation loop with that of the self-interference signal in a relatively large broadband scope, thus causing a difficulty to cancel the interference signal with the drastic phase variation which is reflected from the antenna port. Of course, the self-interference signal may further include other types of interference signals, and embodiments of the invention are mainly to cancel the interference signal of which the phase varies drastically. Herein, an interference signal reflected from the antenna port is taken as an example for description.

A self-interference cancellation method is provided according to an embodiment of the invention. Referring to Fig.2, the method includes:
201, a self-interference cancellation device splits a transmitting signal to obtain a first transmitting signal.

A self-interference signal includes an interference signal which is generated due to the transmitting signal being reflected from an antenna port. The interference signal reflected from the antenna port is the transmitting signal bounced back by the antenna port when transmitted through the antenna, thus a frequency of the transmitting signal is the same as that of the self-interference signal. It is needed to split the transmitting signal to obtain the first transmitting signal, regulate an amplitude-frequency characteristic of the first transmitting signal to generate a signal with a same amplitude-phase characteristic as the self-interference signal, and combine the generated signal with the self-interference signal after phase-shift and attenuation to cancel the self-interference signal. Of course, the self-interference signal may further include other types of interference signals, and the first transmitting signal herein is mainly used to cancel a self-interference signal of which the phase varies drastically.

202, the self-interference cancellation device regulates the amplitude-frequency characteristic of the first transmitting signal based on the amplitude-frequency characteristic of the self-interference signal.

Optionally, at least one RLC (resistor inductor capacitor) circuit may be used to regulate a phase of the first transmitting signal, so that a phase variation of the first transmitting signal is identical or similar to a phase variation of the self-interference signal reflected from the antenna when signal frequency varies. In a case that number of the RLC circuits is larger than or equal to two, the RLC circuits are connected in series.

Or, the regulation may be performed through a port network including an attenuator, a delayer, a combiner and a splitter. In this way, the amplitude-frequency characteristic of the first transmitting signal is regulated to be identical to the amplitude-frequency characteristic of the self-interference signal. Herein, the amplitude-frequency characteristic refers to a rule in which the amplitude varies with the frequency. Thus, the amplitude-phase characteristic of the first transmitting signal is identical to the amplitude-phase characteristic of the self-interference signal, and then the first transmitting signal is phase-shifted, attenuated, and combined with the self-interference signal, thereby the self-interference signal is cancelled.

203, the self-interference cancellation device performs, based on the self-interference signal, amplitude-phase regulation on the first transmitting signal of which the amplitude-frequency characteristic has been regulated.

Herein, the amplitude-phase regulation includes performing phase-shift and attenuation on the first transmitting signal, where the phase-shift and attenuation are not in particular order, i.e., the phase-shift may be performed before or after the attenuation. The amplitude of the first transmitting signal may be regulated to be identical or similar to that of the self-interference signal through the attenuation. Of course, a best result is that the amplitude of the first transmitting signal is identical to that of the self-interference signal. However, there is an error in practical applications, thus it is feasible that the amplitude of the first transmitting signal is regulated to be similar to that of the self-interference signal. The phase of the first transmitting signal is regulated to be inverse or approximately inverse to that of the self-interference signal through the phase-shift. In this way, the first transmitting signal may cancel the self-interference signal.

204, the self-interference cancellation device combines the first transmitting signal, which has been subjected to the amplitude-phase regulation, with the self-interference signal.

Since the first transmitting signal obtained by splitting the transmitting signal, together with the interference signal reflected from the antenna port are both from the transmitting signal, frequency variations of the first transmitting signal and the interference signal are identical. When the phase of the self-interference signal varies drastically, the amplitude-frequency characteristic (a rule in which the amplitude varies with the frequency) of the first transmitting signal is regulated to be identical to the amplitude-frequency characteristic of the self-interference signal, a first transmitting signal which has the same amplitude-phase characteristic as the self-interference signal is simulated, and the first transmitting signal of which the amplitude-frequency characteristic has been regulated is phase-shifted and attenuated, so that the phase of the first transmitting signal is inverse to that of the self-interference signal, and the amplitude of the first transmitting signal is identical to that of the self-interference signal. Then the first transmitting signal is combined with the self-interference signal, thereby the self-interference signal is cancelled. Of course, due to errors and like practical reasons, the interference may not be eliminated completely but only the result of the interference cancellation can be improved as much as possible.

In the self-interference cancellation method provided according to the embodiment of the invention, the first transmitting signal is obtained by splitting the transmitting signal, the amplitude-frequency characteristic of the first transmitting signal is regulated based on the amplitude-frequency characteristic of the self-interference signal, and amplitude-phase regulation is performed on the first transmitting signal of which the amplitude-frequency characteristic has been regulated, in order to cancel the self-interference signal. A difficulty to cancel the self-interference signal of which the phase varies drastically is avoided, and an influence on a received signal caused by the self-interference signal is lowered.

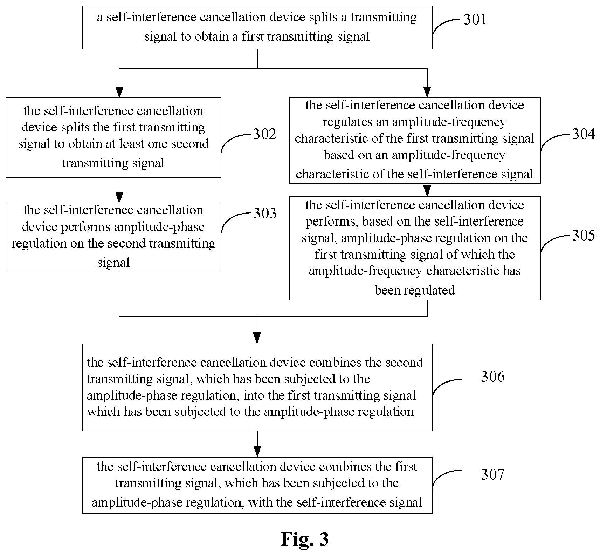

A self-interference cancellation method is provided according to another embodiment of the invention. Referring to Fig.3, the method includes:
301, a self-interference cancellation device splits a transmitting signal to obtain a first transmitting signal.

A self-interference signal mainly includes an interference signal which is generated due to the transmitting signal being reflected from an antenna port, and a signal leaked by the transmitting signal at a transmitting end, thus a frequency of the self-interference signal is the same as that of the transmitting signal. The first transmitting signal is obtained by splitting the transmitting signal, and an amplitude-frequency characteristic and an amplitude-phase characteristic of the first transmitting signal are regulated, so that the amplitude of the first transmitting signal is identical to that of the self-interference signal and the phase of the first transmitting signal is inverse to that of the self-interference signal, which allows the cancellation of the self-interference signal through the first transmitting signal.

302, the self-interference cancellation device splits the first transmitting signal to obtain at least one second transmitting signal.

The second transmitting signal obtained by splitting the first transmitting signal may be used to cancel the interference signal leaked by the transmitting signal at the transmitting end. In other words, the second transmitting signal is mainly for a self-interference signal of which the phase does not vary drastically, thereby improving a result of the self-interference signal cancellation. Of course, multiple second transmitting signals may be obtained by splitting to improve a result of the interference cancellation.

303, the self-interference cancellation device performs amplitude-phase regulation on the second transmitting signal.

Herein, the amplitude-phase regulation includes performing phase-shift and attenuation on the second transmitting signal, where the phase-shift and attenuation are not in particular order, i.e., the phase-shift may be performed before or after the attenuation. The amplitude of the second transmitting signal may be regulated to a preset amplitude through the attenuation, and the phase of the second transmitting signal may be regulated to a preset phase through the phase-shift. In this way, the interference signal leaked at the transmitting end may be cancelled through the second transmitting signal, and the result of the interference cancellation signal is improved.

After step 301, the method further includes:
304, the self-interference cancellation device regulates an amplitude-frequency characteristic of the first transmitting signal based on an amplitude-frequency characteristic of the self-interference signal.

Optionally, at least one RLC circuit may be used to regulate the phase of the first transmitting signal, so that a phase variation of the first transmitting signal is identical or similar to a phase variation of the self-interference signal reflected from the antenna when signal frequency varies. In a case that number of the RLC circuits is larger than or equal to two, the RLC circuits are connected in series.

Or, the regulation is performed through a port network including an attenuator, a delayer, a combiner and a splitter. The delayer is configured to perform phase-shift on the signal through time-delay, and the attenuator is configured to attenuate the signal. In this way, the attenuator regulates an attenuation factor, the delayer regulates a delay factor, whereby the amplitude-frequency characteristic of the first transmitting signal is regulated to be identical to the amplitude-frequency characteristic of the self-interference signal. The first transmitting signal is simulated as a signal of which the amplitude-phase characteristic is identical to the amplitude-phase characteristic of the self-interference signal, and then the first transmitting signal is phase-shifted and attenuated, so that the amplitude of the first transmitting signal is identical to that of the self-interference signal, and the phase of the first transmitting signal is inverse to that of the self-interference signal, which allows the self-interference signal cancellation.

Specifically, step 304 includes the following steps.

304a, the self-interference cancellation device splits the first transmitting signal into a first branch signal and a second branch signal.

304b, the self-interference cancellation device delays the second branch signal based on a preset second branch delay factor, and attenuates the delayed second branch signal based on a preset second branch attenuation factor, where the preset second branch delay factor and the preset second branch attenuation factor are set based on the self-interference signal.

304c, the self-interference cancellation device combines the first branch signal and the attenuated second branch signal into a fourth branch signal.

304d, the self-interference cancellation device splits the fourth branch signal to obtain a third branch signal.

The self-interference cancellation device delays the third branch signal based on a preset third branch delay factor, and attenuates the delayed third branch signal based on a preset third branch attenuation factor, where the preset third branch delay factor and the preset third branch attenuation factor are set based on the self-interference signal.

304e, the self-interference cancellation device combines the attenuated third branch signal into the fourth branch signal.

304f, the self-interference cancellation device outputs the fourth branch signal as the first transmitting signal of which the amplitude-frequency characteristic has been regulated.

A transmission direction of the second branch signal is opposite to that of the first branch signal, transmission directions of the first branch signal, the third branch signal and the fourth branch signal are the same as that of the first transmitting signal.

Or, specifically, step 304 may include the following steps:

304a, the self-interference cancellation device splits the first transmitting signal into a first branch signal and a second branch signal.

304b, the self-interference cancellation device attenuates the first branch signal based on a preset first branch attenuation factor.

The first branch attenuation factor is set based on the self-interference signal.

After step 304a, the method further includes: 304c, the self-interference cancellation device delays the second branch signal based on a preset second branch delay factor.

The second branch delay factor is set based on the self-interference signal.

304d, the self-interference cancellation device splits the delayed second branch signal to obtain a fifth branch signal.

304e, the self-interference cancellation device delays the fifth branch signal based on a preset fifth branch delay factor, and attenuates the delayed fifth branch signal based on a preset fifth branch attenuation factor.

The fifth branch delay factor and the fifth branch attenuation factor are set based on the self-interference signal.

After step 304c, the method further includes: 304f, the self-interference cancellation device attenuates the second branch signal based on a preset second branch attenuation factor.

The second branch attenuation factor is set based on the self-interference signal.

After step 304b, 304e, and 304f, the method further includes:

304g, the self-interference cancellation device combines the attenuated fifth branch signal, the attenuated second branch signal, and the attenuated first branch signal into the fourth branch signal.

304h, the self-interference cancellation device attenuates the fourth branch signal based on a preset fourth branch attenuation factor.

The fourth branch attenuation factor is set based on the self-interference signal.

304i, the self-interference cancellation device splits the attenuated fourth branch signal to obtain a third branch signal.

304j, the self-interference cancellation device delays the third branch signal based on a preset third branch delay factor.

The third branch delay factor is set based on the self-interference signal.

304k, the self-interference cancellation device splits the delayed third branch signal to obtain a sixth branch signal.

304l, the self-interference cancellation device delays the sixth branch signal based on a preset sixth branch delay factor, and attenuates the delayed sixth branch signal based on a preset sixth branch attenuation factor.

The sixth branch delay factor and the sixth branch attenuation factor are set based on the self-interference signal.

After step 304j, the method further includes: 304m, the self-interference cancellation device attenuates the third branch signal based on the preset third branch attenuation factor.

The third branch attenuation factor is set based on the self-interference signal.

304n, the self-interference cancellation device combines the attenuated fifth branch signal and the attenuated sixth branch signal into the fourth branch signal.

304o, the self-interference cancellation device outputs the attenuated fourth branch signal as the first transmitting signal of which the amplitude-frequency characteristic has been regulated.

305, the self-interference cancellation device performs, based on the self-interference signal, amplitude-phase regulation on the first transmitting signal of which the amplitude-frequency characteristic has been regulated.

Herein, the amplitude-phase regulation includes performing phase-shift and attenuation on the first transmitting signal, where the phase-shift and attenuation are not in particular order, i.e., the phase-shift may be performed before or after the attenuation. The amplitude of the first transmitting signal may be regulated to be identical or similar to that of the self-interference signal through the attenuation, and the phase of the first transmitting signal is inverse or approximately inverse to that of the self-interference signal through the phase-shift, which allows to cancel the self-interference signal through the first transmitting signal.

After step 303 and 305, the method further includes:

306, the self-interference cancellation device combines the second transmitting signal, which has been subjected to the amplitude-phase regulation, into the first transmitting signal which has been subjected to the amplitude-phase regulation.

307, the self-interference cancellation device combines the first transmitting signal, which has been subjected to the amplitude-phase regulation, with the self-interference signal.

After the combination of the first transmitting signal and the self-interference signal, the self-interference signal is canceled.

Since the first transmitting signal obtained by splitting the transmitting signal, together with the interference signal reflected from the antenna port are both from the transmitting signal, frequency variations of the first transmitting signal and the interference signal are identical. When the phase of the self-interference signal varies drastically, the amplitude-frequency characteristic (a rule in which the amplitude varies with the frequency) of the first transmitting signal is regulated to be identical to the amplitude-frequency characteristic of the self-interference signal, a first transmitting signal which has the same amplitude-phase characteristic as the self-interference signal is simulated, and the phase and amplitude of the first transmitting signal are regulated, so that the phase of the first transmitting signal is inverse to that of the self-interference signal, and the amplitude of the first transmitting signal is identical to that of the self-interference signal. In this way, the self-interference signal is canceled. Furthermore, the second transmitting signal is obtained by splitting the transmitting signal. Since the self-interference signal includes both an interference signal reflected from the antenna port and an interference signal leaked at the transmitting end, and the interference signal leaked at the transmitting end may be canceled through the phase-shifted and attenuated second transmitting signal. Of course, due to errors and like practical reasons, the interference may not be eliminated completely but only the result of the interference cancellation can be improved as much as possible.

In the self-interference cancellation method provided according to the embodiment of the invention, the first transmitting signal is obtained by splitting the transmitting signal, the amplitude-frequency characteristic of the first transmitting signal is regulated based on the amplitude-frequency characteristic of the self-interference signal, and amplitude-phase regulation is performed on the first transmitting signal of which the amplitude-frequency characteristic has been regulated, thereby canceling the self-interference signal. A difficulty to cancel the self-interference signal of which the phase varies drastically is avoided, and an influence on a received signal caused by the self-interference signal is lowered.

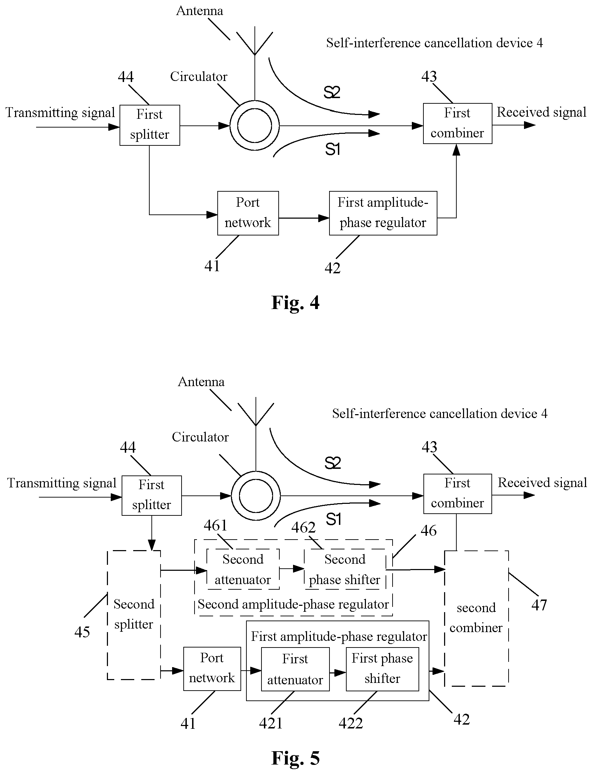

A self-interference cancellation device is provided according to an embodiment of the invention. The device is connected to a full-duplex transceiver antenna and a circulator. Of course, the self-interference cancellation device provided according to the embodiment of the invention may be also connected to other transceiver devices other than the full-duplex transceiver antenna. The full-duplex transceiver antenna is taken as an example for illustration. Referring to Fig.4, the self-interference cancellation device 4 includes a port network 41, a first amplitude-phase regulator 42, a first combiner 43, and a first splitter 44.

An output port of the first splitter 44 is connected to an input port of the port network 41, an input port of the first amplitude-phase regulator 42 is connected to an output port of the port network 41, and an input port of the first combiner 43 is connected to an output port of the first amplitude-phase regulator 42.

The port network 41 has two ports which are port 1 and port 2, referring to Fig.5. A scattering parameter S may be used to analyze a response of the port network. It is supposed that a signal inputted into the port network 41 is $a_1$, a signal generated due to bouncing back of the input signal is $b_1$, an output signal is $b_2$, a signal generated due to bouncing back of the output signal is $a_2$, and bi and $a_2$ are interference signals of the port network 41. $S_{21}$ represents a response at the port 2 in response to the input signal $a_1$ at the port 1, $S_{11}$ represents a response at the port 1 in response to the input signal at the port 1, a first transmitting signal is inputted into the port 1, the port 2 is connected to a matching device, and for the matching device, a value of the bounced signal $a_2$ is zero. $S_{21}$ may be represented as:

$$S_{21} = \frac{b_2}{a_1}\bigg|_{a_2=0}$$

A signal transmitted through the antenna is:

$$b_1 = S_{11} \cdot a_1$$

Combining the two formulas above, it may be concluded that:

$$S_{21} = k \times S_{11}, \text{ where } \quad k = \frac{b_2}{b_1}$$

The first splitter 44 is configured to split a transmitting signal to obtain the first transmitting signal.

A self-interference signal mainly includes an interference signal which is generated due to the transmitting signal being reflected from an antenna port, and a signal leaked by the transmitting signal at a transmitting end, thus a frequency of the self-interference signal is the same as that of the transmitting signal. The first transmitting signal is obtained by splitting the transmitting signal, and an amplitude-frequency characteristic and an amplitude-phase characteristic of the first transmitting signal are regulated, so that the amplitude of the first transmitting signal is identical to that of the self-interference signal, and the phase of the first transmitting signal is inverse to that of the self-interference signal, which allows to cancel the self-interference signal via the first transmitting signal.

The port network 41 is configured to regulate, based on an amplitude-frequency characteristic of the self-interference signal, an amplitude-frequency characteristic of the first transmitting signal out of the first splitter 44.

The first amplitude-phase regulator 42 is configured to perform, based on the self-interference signal, amplitude-phase regulation on the first transmitting signal of which the amplitude-frequency characteristic has been regulated by the port network 41.

Herein, the amplitude-phase regulation includes phase-shift and attenuation, and the phase-shift and attenuation are not limited to a particular order. Of course, a best result of the phase-shift and attenuation is that the amplitude of the first transmitting signal is identical to that of the self-interference signal, and the phase of the first transmitting signal is inverse to that of the self-interference signal. However, there would be errors in practical applications, thus a proximate regulation is also feasible.

The first combiner 43 is configured to combine the self-interference signal with the first transmitting signal which has been subjected to the amplitude-phase regulation performed by the first amplitude-phase regulator.

In the self-interference cancellation device provided according to the embodiment of the invention, the first transmitting signal is obtained by splitting the transmitting signal, the amplitude-frequency characteristic of the first transmitting signal is regulated based on the amplitude-frequency characteristic of the self-interference signal, and amplitude-phase regulation is performed on the first transmitting signal of which the amplitude-frequency characteristic has been regulated, in order to cancel the self-interference signal. A difficulty to cancel the self-interference signal of which the phase varies drastically is avoided, and an influence on a received signal caused by the self-interference signal is lowered.

Optionally, referring to Fig.5, in the self-interference cancellation device 4 provided according to an embodiment of the invention, the port network 41 is further configured to regulate, based on an amplitude-frequency characteristic of the self-interference signal, an amplitude-frequency characteristic of the first transmitting signal, so that the amplitude-frequency characteristic of the first transmitting signal is identical to that of the self-interference signal.

Optionally, the first amplitude-phase regulator 42 includes a first attenuator 421 and a first phase shifter 422.

An output port of the first attenuator 421 is connected to an input port of the first phase shifter 422.

Or an output port of the first phase shifter 422 is connected to an input port of the first attenuator 421.

The connection between the first attenuator 421 and the first phase shifter 422 is not in particular order. In Fig.4, only a connection that the first attenuator 421 is arranged ahead of the first phase shifter 422 is shown. Positions of the first attenuator 421 and the first phase shifter 422 may be exchanged.

Specifically, the first attenuator 421 is configured to attenuate the first transmitting signal of which the amplitude-frequency characteristic has been regulated by the port network 41, so that the amplitude of the attenuated first transmitting signal is identical to that of the self-interference signal.

The first phase shifter 422 is configured to perform the phase-shift on the first transmitting signal which has been attenuated by the first attenuator 421, so that the phase of the phase-shifted first transmitting signal is inverse to that of the self-interference signal.

Or, the first phase shifter 422 is configured to perform the phase-shift on the first transmitting signal of which the amplitude-frequency characteristic has been regulated by the port network 41, so that the phase of the phase-shifted first transmitting signal is inverse to that of the self-interference signal.

The first attenuator 421 is configured to attenuate the first transmitting signal which has been phase-shifted by the first phase shifter 422, so that the amplitude of the attenuated first transmitting signal is identical to that of the self-interference signal.

Optionally, the self-interference cancellation device 4 may further include a second splitter 45, a second amplitude-phase regulator 46 and a second combiner 47.

An input port of the second splitter 45 is connected to an output port of the first splitter 44, an output port of the second splitter 45 is connected to an input port of the port network 41 and to an input port of the second amplitude-phase regulator 46, an output port of the second amplitude-phase regulator 46 is connected to an input port of the second combiner 47, an output port of the first amplitude-phase regulator 42 is connected to an input port of the second combiner 47, and an output port of the second combiner 47 is connected to an input port of the first combiner 43.

The second splitter 45 is configured to split the first transmitting signal to obtain at least one second transmitting signal.

The second amplitude-phase regulator 46 is configured to perform the amplitude-phase regulation on the second transmitting signal out of the second splitter 45.

The second combiner 47 is configured to combine the second transmitting signal, which has been subjected to the amplitude-phase regulation performed by the second amplitude-phase regulator 46, with the first transmitting signal which has been subjected to the amplitude-phase regulation.

Optionally, the second amplitude-phase regulator 46 includes a second attenuator 461 and a second phase shifter 462.

An output port of the second attenuator 461 is connected to an input port of the second phase shifter 462.

Or an output port of the second phase shifter 462 is connected to an input port of the second attenuator 461.

The connection between the second attenuator 461 and the second phase shifter 462 is not in particular order. In Fig.4, only a connection that the second attenuator 461 is arranged ahead of the second phase shifter 462 is shown. Positions of the second attenuator 461 and the second phase shifter 462 may be exchanged.

Specifically, the second attenuator 461 is configured to attenuate the second transmitting signal out of the second splitter 45, so that the amplitude of the attenuated second transmitting signal reaches a preset amplitude.

The second phase shifter 462 is configured to perform the phase-shift on the second transmitting signal which has been attenuated by the second attenuator 461, so that the phase of the phase-shifted second transmitting signal reaches a preset phase.

Or, the second phase shifter 462 is configured to perform the phase-shift on the second transmitting signal out of the second splitter 45, so that the phase of the phase-shifted second transmitting signal reaches a preset phase.

The second attenuator 461 is configured to attenuate the second transmitting signal which has been phase-shifted by the second phase shifter 462, so that the amplitude of the attenuated second transmitting signal reaches a preset amplitude.

The second transmitting signal may be used to cancel an interference signal leaked at a transmitting end. Of course, the self-interference signal may further include other types of interference signals, and the second transmitting signal herein is mainly for an interference signal of which the phase does not vary drastically. The result of the self-interference signal cancellation is improved. Of course, multiple second transmitting signals may be obtained by splitting to improve the result of the interference cancellation.

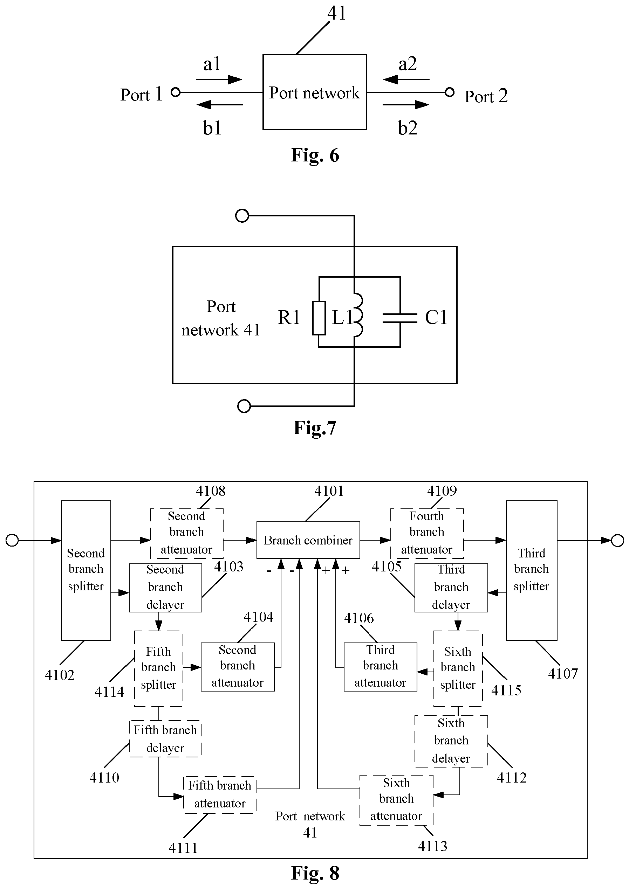

Optionally, referring to Fig.6, the port network 41 may be formed by RLC, including at least one resistor inductor capacitor RLC circuit. In a case that number of the RLC circuits is larger than or equal to two, the RLC circuits are connected in series. The at least one RLC circuit includes at least one resistor, at least one capacitor, and at least one inductor, and the at least one resistor, the at least one capacitor, and the at least one inductor are connected in parallel.

Specifically, values of the inductor, resistor, and capacitor are adjusted, to make the amplitude-frequency characteristic of the first transmitting signal similar or identical to that of the self-interference signal.

The port network 41 is specifically configured to regulate, based on the amplitude-frequency characteristic of the self-interference signal, the phase of the first transmitting signal through the at least one RLC circuit.

Or, referring to Fig.7, the port network 41 may further consist of devices such as a splitter, a delayer, a attenuator, and a combiner. Specifically, the port network 41 includes a second branch splitter 4102, a branch combiner 4101, a second branch delayer 4103, a second branch attenuator 4104, a third branch splitter 4107, a third branch delayer 4105 and a third branch attenuator 4106.

An output port of the second branch splitter 4102 is connected to an input port of the second branch delayer 4103, an output port of the second branch splitter 4102 is connected to an input port of the branch combiner 4101, an output port of the second branch delayer 4103 is connected to an input port of the second branch attenuator 4104, an output port of the second branch attenuator 4104 is connected to an input port of the branch combiner 4101, an input port of the third branch splitter 4107 is connected to an output port of the branch combiner 4101, an output port of the third branch splitter 4107 is connected to an input port of the third branch delayer 4105, an output port of the third branch delayer 4105 is connected to an input port of the third branch attenuator 4106, and an output port of the third branch attenuator 4106 is connected to an input port of the branch combiner 4101.

In a first-order network, i.e., the connection mentioned above, the connection between the delayer and the attenuator is not in particular order. In Fig.8, only a connection that the delayer is arranged ahead of the attenuator is shown, but it does not means that the delayer cannot be connected after the attenuator.

It is supposed that a first transmitting signal outputted by the port network is Y, an input first transmitting signal is X, and an input signal of the branch combiner 4101 is equal to an output signal of the branch combiner 4101, thus an equation may be established accordingly:

$$(1 + a_1 z^{-1})Y = (b_0 - b_1 z^{-1})X$$

where $a_1$, $b_0$, and $b_1$ are attenuation factors, and $z^{-1}$ is a frequency factor. Through transformation of the above equation, the following may be obtained:

$$Y = \frac{b_0 - b_1 z^{-1}}{1 + a_1 z^{-1}} X$$

When the frequency varies, a variation of the frequency factor causes a variation of the signal Y outputted by the port network, and in this way, the port network may regulate the amplitude-frequency characteristic of the first transmitting signal to be identical to that of the self-interference signal.

The second branch splitter 4102 is configured to split the first transmitting signal into a first branch signal and a second branch signal.

The second branch delayer 4103 is configured to delay, based on a preset second branch delay factor, the second branch signal out of the second branch splitter 4102. The preset second branch delay factor is set based on the self-interference signal.

The second branch attenuator 4104 is configured to attenuate, based on a preset second branch attenuation factor, the second branch signal which has been delayed by the second branch delayer 4103. The preset second branch attenuation factor is set based on the self-interference signal.

The branch combiner 4101 is configured to combine the first branch signal out of the second branch splitter 4102 and the second branch signal which has been attenuated by the second branch attenuator 4104 as a fourth branch signal.

The third branch splitter 4107 is configured to split the fourth branch signal combined by the branch combiner 4101, to obtain a third branch signal.

The third branch delayer 4105 is configured to delay, based on a preset third branch delay factor, the third branch signal out of the third branch splitter 4107. The preset third branch delay factor is set based on the self-interference signal.

The third branch attenuator 4106 is configured to attenuate, based on a preset third branch attenuation factor, the third branch signal which has been delayed by the third branch delayer 4105. The preset third branch attenuation factor is set based on the self-interference signal.

The branch combiner 4105 is further configured to combine the third branch signal which has been attenuated by the third branch attenuator 4106 into the fourth branch signal, and transmit the fourth branch signal as a first transmitting signal of which the amplitude-frequency characteristic has been regulated.

A transmission direction of the second branch signal is opposite to that of the first branch signal, the transmission directions of the first branch signal, the third branch signal and the fourth branch signal are the same as that of the first transmitting signal.

Optionally, in Fig.8, the port network may further include a first branch attenuator 4108, a fourth branch attenuator 4109, a fifth branch splitter 4114, a fifth branch delayer 4110, a fifth branch attenuator 4111, a sixth branch splitter 4115, a sixth branch delayer 4112 and a sixth branch attenuator 4113.

An input port of the first branch attenuator 4108 is connected to an output port of the second branch splitter 4102, an output port of the first branch attenuator 4108 is connected to an input port of the branch combiner 4101, and the branch combiner 4101 is connected to the second branch splitter 4102 through the first branch attenuator 4108.

An input port of the fourth branch attenuator 4109 is connected to an output port of the branch combiner 4101, an output port of the fourth branch attenuator 4109 is connected to an input port of the third branch splitter 4107, and the branch combiner 4101 is connected to the third branch splitter 4107 through the fourth branch attenuator 4109.

An input port of the fifth branch splitter is connected to an output port of the second branch delayer 4103, an output port of the fifth branch splitter 4114 is connected to an input port of the second branch attenuator 4104, the second branch attenuator 4104 is connected to the second branch delayer 4103 through the fifth branch splitter 4114, the output port of the fifth branch splitter 4114 is connected to an input port of the fifth branch delayer 4110, an output port of the fifth branch delayer 4110 is connected to an input port of the fifth branch attenuator 4111, an output port of the fifth branch attenuator 4111 is connected to the input port of the branch combiner 4101, an input port of the sixth branch splitter 4114 is connected to an output port of the third branch delayer 4105, an output port of the sixth branch splitter 4114 is connected to an input port of the third branch attenuator 4106, the third branch attenuator 4106 is connected to the third branch delayer 4105 through the sixth branch splitter 4114, the output port of the sixth branch splitter 4114 is connected to an input port of the sixth branch delayer 4112, an output port of sixth branch delayer 4112 is connected to an input port of the sixth branch attenuator 4113, and an output port of the sixth branch attenuator 4113 is connected to an input port of the branch combiner 4101.

In a case that the fifth branch and the sixth branch are introduced, a second-order network may be formed, and the amplitude-frequency characteristic may be regulated based on the following equation:

$$Y = \frac{b_0 - b_1 z^{-1} - b_2 z^{-2}}{1 + a_1 z^{-1} + a_2 z^{-2}} X$$

Where $a_1$, $b_0$, $b_1$, $b_2$, and $a_2$ are attenuation factors, and $z^{-1}$ and $z^{-2}$ are frequency factors.

Of course, the port network provided in the embodiment of the invention is not limited to the first-order and second-order, and a network of third-order or higher than third-order may be formed based on the same structure, which may further increase the precision of self-interference signal simulation for the port network, and improve the result of interference cancellation.

The first branch attenuator 4108 is configured to attenuate, based on a preset first branch attenuation factor, the first branch signal out of the second branch splitter 4102. The preset first branch attenuation factor is set based on the self-interference signal.

The fourth branch attenuator 4109 is configured to attenuate, based on a preset first branch attenuation factor, the fourth branch signal combined by the branch combiner 4101. The preset first branch attenuation factor is set based on the self-interference signal.

The fifth branch splitter 4114 is configured to split the second branch signal which has been delayed by the second branch delayer 4103, to obtain a fifth branch signal.

The fifth branch delayer 4110 is configured to delay, based on a preset fifth branch delay factor, the fifth branch signal out of the fifth branch splitter 4114. The preset fifth branch delay factor is set based on the self-interference signal.

The fifth branch attenuator 4111 is configured to attenuate, based on a preset fifth branch attenuation factor, the fifth branch signal which has been delayed by the fifth branch delayer 4110. The preset fifth branch attenuation factor is set based on the self-interference signal.

The branch combiner 4101 is further configured to combine the first branch signal out of the second branch splitter 4102, the fifth branch signal which has been attenuated by the fifth branch attenuator 4111, and the second branch signal which has been attenuated by the second branch attenuator 4104 into the fourth branch signal.

The sixth branch splitter 4114 is configured to split the third branch signal which has been delayed by the third branch delayer 4105 to obtain a sixth branch signal.

The sixth branch delayer 4112 is configured to delay, based on a preset sixth branch delay factor, the sixth branch signal out of the sixth branch splitter 4114. The preset sixth branch delay factor is set based on the self-interference signal.

The sixth branch attenuator 4113 is configured to attenuate, based on a preset sixth branch attenuation factor, the sixth branch signal which has been delayed by the sixth branch delayer 4112. The preset sixth branch attenuation factor is set based on the self-interference signal.

The branch combiner 4101 is further configured to combine the third branch signal which has been attenuated by the third branch attenuator 4106, and the sixth branch signal which has been attenuated by the sixth branch attenuator 4112 into the fourth branch signal.

A transmission direction of the fifth branch signal is the same as that of the second branch signal, and the transmission direction of the sixth branch signal is the same as that of the third branch signal.

Since the first transmitting signal obtained by splitting the transmitting signal, together with the interference signal reflected from the antenna port are both from the transmitting signal, frequency variations of the first transmitting signal and the interference signal are identical. When the phase of the self-interference signal varies drastically, the amplitude-frequency characteristic (a rule in which the amplitude varies with the frequency) of the first transmitting signal is regulated to be identical to the amplitude-frequency characteristic of the self-interference signal, a first transmitting signal which has the same amplitude-phase characteristic as the self-interference signal is simulated, and the phase and amplitude of the first transmitting signal are regulated, so that the phase of the first transmitting signal is inverse to that of the self-interference signal, and the amplitude of the first transmitting signal is identical to that of the self-interference signal. In this way, the self-interference signal is canceled. At the same time, the second transmitting signal is obtained by splitting the transmitting signal. Since the self-interference signal includes both an interference signal reflected from an antenna port and an interference signal leaked at a transmitting end, and the interference signal leaked at the transmitting end may be canceled through the phase-shifted and attenuated second transmitting signal. Of course, due to errors and like practical reasons, the interference may not be eliminated completely but only the result of the interference cancellation can be improved as much as possible.

In the self-interference cancellation device provided according to the embodiment of the invention, the first transmitting signal is obtained by splitting the transmitting signal, the amplitude-frequency characteristic of the first transmitting signal is regulated based on the amplitude-frequency characteristic of the self-interference signal, and amplitude-phase regulation is performed on the first transmitting signal of which the amplitude-frequency characteristic has been regulated, in order to cancel the self-interference signal. A difficulty to cancel the self-interference signal of which the phase varies drastically is avoided, and an influence on a received signal caused by the self-interference signal is lowered.

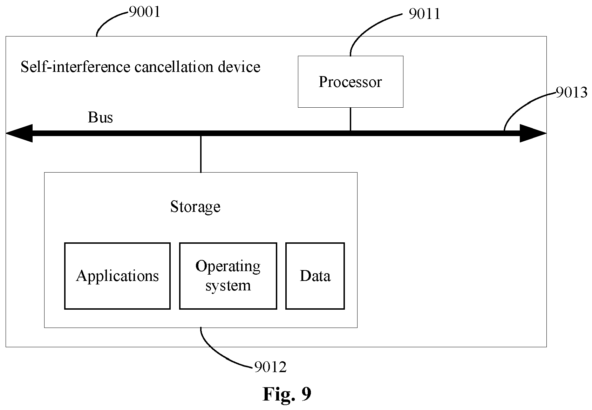

A self-interference cancellation device 9001 is provided according to another embodiment of the invention. Referring to Fig.9, the device may be embedded with a micro-computer or the device may be a micro-computer, for example, portable devices such as general-purpose computer, customized computer, mobile terminal, or tablet device. The self-interference cancellation device 9001 includes at least one processor 9011, a storage 9012, and a bus 9013. The at least one processor 9011 is connected to and communicates with the storage 9012 through the bus 9013.

The bus 9013 may be an ISA (industry standard architecture) bus, a PCI (peripheral component) bus, an EISA (extended industry standard architecture) bus, or the like. The bus 9013 may be divided into an address bus, a data bus, a control bus, and so on. For convenience of illustration, the bus is represented by a thick line, however, it does not indicate that there is only one bus or one type of bus.

The storage 9012 is configured to store executable programs including computer instructions. The storage 9012 may include high speed RAM, or may further include non-volatile memory (non-volatile memory), such as at least one disk memory.

The processor 9011 may be a central processing unit (referred to as CPU), an application specific integrated circuit (referred to as ASIC), or one or more integrated circuits configured to implement the embodiments of the invention.

The processor 9011 is configured to split a transmitting signal to obtain a first transmitting signal, regulate an amplitude-frequency characteristic of the first transmitting signal based on an amplitude-frequency characteristic of a self-interference signal, where the self-interference signal is an interference signal reflected from the transmitting signal, perform, based on the self-interference signal, amplitude-phase regulation on a first transmitting signal of which the amplitude-frequency characteristic has been regulated, and combine the self-interference signal with the first transmitting signal which has been subjected to the amplitude-phase regulation.

In the self-interference cancellation device provided according to the embodiment of the invention, the first transmitting signal is obtained by splitting the transmitting signal, the amplitude-frequency characteristic of the first transmitting signal is regulated based on the amplitude-frequency characteristic of the self-interference signal, and amplitude-phase regulation is performed on the first transmitting signal of which the amplitude-frequency characteristic has been regulated, in order to cancel the self-interference signal. A difficulty to cancel the self-interference signal of which the phase varies drastically is avoided, and an influence on a received signal caused by the self-interference signal is lowered.

Optionally, the processor 9011 is specifically configured to regulate the amplitude-frequency characteristic of the first transmitting signal based on the amplitude-frequency characteristic of the self-interference signal, so that the amplitude-frequency characteristic of the first transmitting signal is identical to that of the self-interference signal.

Optionally, the processor 9011 is specifically configured to attenuate the first transmitting signal of which the amplitude-frequency characteristic has been regulated, so that the amplitude of the attenuated first transmitting signal is identical to that of the self-interference signal, and perform phase-shift on the attenuated first transmitting signal, so that the phase of the phase-shifted first transmitting signal is inverse to that of the self-interference signal.

Or, the processor 9011 is specifically configured to perform phase-shift on the first transmitting signal of which the amplitude-frequency characteristic has been regulated, so that the phase of the phase-shifted first transmitting signal is inverse to that of the self-interference signal, and attenuate the phase-shifted first transmitting signal, so that the amplitude of the attenuated first transmitting signal is identical to that of the self-interference signal.

Optionally, the processor 9011 is further configured to split the first transmitting signal to obtain at least one second transmitting signal, perform amplitude-phase regulation on the second transmitting signal, and combine the second transmitting signal, which has been subjected to the amplitude-phase regulation, into the first transmitting signal which has been subjected to the amplitude-phase regulation.

Optionally, the processor 9011 is specifically configured to attenuate the second transmitting signal, so that the amplitude of the attenuated second transmitting signal reaches a preset amplitude, and perform phase-shift on the attenuated second transmitting signal, so that the phase of the phase-shifted second transmitting signal reaches a preset phase.

Or, the processor 9011 is specifically configured to perform phase-shift on the second transmitting signal, so that the phase of the phase-shifted second transmitting signal reaches a preset phase, and attenuate the phase-shifted second transmitting signal, so that the amplitude of the attenuated second transmitting signal reaches a preset amplitude.

The self-interference signal may further include an interference signal leaked at a transmitting end, and the interference signal leaked at the transmitting end may be cancelled through regulating the second transmitting signal. Of course, the self-interference signal may further include other types of interference signals. The second transmitting signal herein is mainly for a self-interference signal of which the phase does not vary drastically. The result of the self-interference signal cancellation is improved. Of course, multiple second transmitting signals may be obtained by splitting to improve the result of the interference cancellation.

Optionally, the processor 9011 is specifically configured to regulate, based on the amplitude-frequency characteristic of the self-interference signal, the phase of the first transmitting signal through at least one resistor inductor capacitor RLC circuit. In a case that number of the RLC circuits is larger than or equal to two, the RLC circuits are connected in series.

Or, the processor 9011 is specifically configured to split the first transmitting signal into a first branch signal and a second branch signal;

delay the second branch signal based on a preset second branch delay factor, and attenuate the delayed second branch signal based on a preset second branch attenuation factor, where the preset second branch delay factor and the preset second branch attenuation factor are set based on the self-interference signal; and

combine the first branch signal and the attenuated second branch signal into a fourth branch signal.

The processor 9011 is further configured to split the fourth branch signal to obtain a third branch signal;

delay the third branch signal based on a preset third branch delay factor, and attenuate the delayed third branch signal based on a preset third branch attenuation factor, where the preset third branch delay factor and the preset third branch attenuation factor are set based on the self-interference signal; and

combine the attenuated third branch signal into the fourth branch signal, and output the fourth branch signal as the first transmitting signal of which the amplitude-frequency characteristic has been regulated.

A transmission direction of the second branch signal is opposite to that of the first branch signal, the transmission directions of the first branch signal, the third branch signal and the fourth branch signal are the same as that of the first transmitting signal.

Optionally, the processor 9011 is further configured to split the delayed second branch signal to obtain a fifth branch signal;

delay the fifth branch signal based on a preset fifth branch delay factor, and attenuate the delayed fifth branch signal based on a preset fifth branch attenuation factor, where the preset fifth branch delay factor and the preset fifth branch attenuation factor are set based on the self-interference signal; and

combine the first branch signal, the attenuated fifth branch signal, and the attenuated second branch signal into the fourth branch signal.

The processor 9011 is further configured to split the delayed third branch signal to obtain a sixth branch signal;

delay the sixth branch signal based on a preset sixth branch delay factor, and attenuate the delayed sixth branch signal based on a preset sixth branch attenuation factor, where the preset sixth branch delay factor and the preset sixth branch attenuation factor are set based on the self-interference signal; and

combine the attenuated third branch signal and the attenuated sixth branch signal into the fourth branch signal.

A transmission direction of the fifth branch signal is the same as that of the second branch signal, and the transmission direction of the sixth branch signal is the same as that of the third branch signal.

The processor 9011 is further configured to attenuate the first branch signal based on a preset first branch attenuation factor, where the preset first branch attenuation factor is set based on the self-interference signal.

The processor 9011 is further configured to attenuate the fourth branch signal based on a preset fourth branch attenuation factor, where the preset fourth branch attenuation factor is set based on the self-interference signal.

Since the first transmitting signal obtained by splitting the transmitting signal, together with the interference signal reflected from the antenna port are both from the transmitting signal, frequency variations of the first transmitting signal and the interference signal are identical. When the phase of the self-interference signal varies drastically, the amplitude-frequency characteristic (a rule in which the amplitude varies with the frequency) of the first transmitting signal is regulated to be identical to the amplitude-frequency characteristic of the self-interference signal, a first transmitting signal which has the same amplitude-phase characteristic as the self-interference signal is simulated, and the phase and amplitude of the first transmitting signal are regulated, so that the phase of the first transmitting signal is inverse to that of the self-interference signal, and the amplitude of the first transmitting signal is identical to that of the self-interference signal. In this way, the self-interference signal is canceled. At the same time, the second transmitting signal is obtained by splitting the transmitting signal. Since the self-interference signal includes both an interference signal reflected from an antenna port and an interference signal leaked at a transmitting end, and the interference signal leaked at the transmitting end may be canceled through the phase-shifted and attenuated second transmitting signal. Of course, due to errors and like practical reasons, the interference may not be eliminated completely but only the result of the interference cancellation can be improved as much as possible.

In the self-interference cancellation device provided according to the embodiment of the invention, the first transmitting signal is obtained by splitting the transmitting signal, the amplitude-frequency characteristic of the first transmitting signal is regulated based on the amplitude-frequency characteristic of the self-interference signal, and amplitude-phase regulation is performed on the first transmitting signal of which the amplitude-frequency characteristic has been regulated, in order to cancel the self-interference signal. A difficulty to cancel the self-interference signal of which the phase varies drastically is avoided, and an influence on a received signal caused by the self-interference signal is lowered.

Based on description of the embodiments mentioned above, those skilled in the art may be clear that the invention may be implemented through hardware, firmware, or a combination of hardware and firmware. When implemented through software, the functions mentioned above may be stored on a computer readable medium or be transmitted as one or more instructions or codes on the computer readable medium. The computer readable medium includes a computer storage medium and a communication medium, and the communication medium includes any medium which transmits computer programs from one place to another place. The storage medium includes any available medium which the computer can access. The following is taken as an example, which the invention is not limited to. The computer readable medium may include RAM (random access memory), ROM (read-only memory), EEPROM (electrically erasable programmable read only memory), CD-ROM (compact disc read only memory), other compact disc storage medium and disk storage medium, other magnetic storage devices, or any other medium which can be used to carry or store expected programs with a form of instruction structure or data structure and can be accessed by the computer. In addition, any proper connection may be the computer readable medium. For example, if the software transmits from a website, a server or other remote sources through a coaxial cable, an optical fiber cable, a twisted-pair line, a DSL (Digital Subscriber Line, digital subscriber line), or wireless technology such as infrared ray, radio and microwave, the coaxial cable, the optical fiber cable, the twisted-pair line, the DSL, or the wireless technology such as infrared ray, radio and microwave are included within the scope of the medium. The disk and disc used in the invention include a CD (compact disc), a laser disc, optical disc, DVD (digital versatile disc), floppy disk and blue-ray disc. In general, the disk replicates data magnetically, and the disc replicates data optically through laser. A combination of the disk and disc mentioned above should also fall within the scope of protection of the computer readable medium.

Specific embodiments of the invention are described above, which are not to limit the scope of the invention. Therefore, the protection scope of the disclosure shall be defined by the appended claims.

## Claims

1.   A self-interference cancellation device (4), comprising a port network (41), a first amplitude-phase regulator (42), a first splitter (44), and a first combiner (43); wherein
an output port of the first splitter (44) is connected to an input port of the port network (41), an input port of the first amplitude-phase regulator (42) is connected to an output port of the port network (41), and an input port of the first combiner (43) is connected to an output port of the first amplitude-phase regulator (42);
the first splitter (44) is configured to split a transmitting signal to obtain a first transmitting signal;
the port network (41) is configured to regulate, based on an amplitude-frequency characteristic of a self-interference signal, an amplitude-frequency characteristic of the first transmitting signal out of the first splitter (44);
the first amplitude-phase regulator (42) is configured to perform, based on the self-interference signal, amplitude-phase regulation on the first transmitting signal of which the amplitude-frequency characteristic has been regulated; and
the first combiner (43) is configured to combine the self-interference signal with the first transmitting signal which has been subjected to the amplitude-phase regulation performed by the first amplitude-phase regulator (42); and
the self-interference cancellation device (4) is **characterized in that**:

the port network (41) comprises a second branch splitter (4102), a branch combiner (4101), a second branch delayer (4103), a second branch attenuator (4104), a third branch splitter (4107), a third branch delayer (4105) and a third branch attenuator (4106);
an output port of the second branch splitter (4102) is connected to an input port of the second branch delayer (4103), an output port of the second branch splitter (4102) is connected to an input port of the branch combiner (4101), an output port of the second branch delayer (4103) is connected to an input port of the second branch attenuator (4104), an output port of the second branch attenuator (4104) is connected to an input port of the branch combiner (4101), an input port of the third branch splitter (4107) is connected to an output port of the branch combiner (4101), an output port of the third branch splitter (4107) is connected to an input port of the third branch delayer (4105), an output port of the third branch delayer (4105) is connected to an input port of the third branch attenuator (4106), and an output port of the third branch attenuator (4106) is connected to an input port of the branch combiner (4101);
the second branch splitter (4102) is configured to split the first transmitting signal into a first branch signal and a second branch signal;
the second branch delayer (4103) is configured to delay, based on a preset second branch delay factor, the second branch signal out of the second branch splitter, wherein the preset second branch delay factor is set based on the self-interference signal;
the second branch attenuator (4104) is configured to attenuate, based on a preset second branch attenuation factor, the second branch signal which has been delayed by the second branch delayer (4103), wherein the preset second branch attenuation factor is set based on the self-interference signal;
the branch combiner (4101) is configured to combine the first branch signal out of the second branch splitter (4102) and the second branch signal which has been attenuated by the second branch attenuator (4104) into a fourth branch signal;
the third branch splitter (4107) is configured to split the fourth branch signal combined by the branch combiner (4101) to obtain a third branch signal;
the third branch delayer (4105) is configured to delay, based on a preset third branch delay factor, the third branch signal out of the third branch splitter, wherein the preset third branch delay factor is set based on the self-interference signal;
the third branch attenuator (4106) is configured to attenuate, based on a preset third branch attenuation factor, the third branch signal which has been delayed by the third branch delayer (4105), wherein the preset third branch attenuation factor is set based on the self-interference signal;

the branch combiner (4101) is further configured to combine the third branch signal which has been attenuated by the third branch attenuator (4106) into the fourth branch signal, and transmit the fourth branch signal as the first transmitting signal of which the amplitude-frequency characteristic has been regulated; and

a transmission direction of the second branch signal is opposite to that of the first branch signal, the transmission directions of the first branch signal, the third branch signal and the fourth branch signal are the same as that of the first transmitting signal.

2. The device according to claim 1, wherein
the port network (41) is further configured to regulate, based on the amplitude-frequency characteristic of the self-interference signal, the amplitude-frequency characteristic of the first transmitting signal, so that the amplitude-frequency characteristic of the first transmitting signal is identical to that of the self-interference signal.

3. The device according to claim 1, wherein
the first amplitude-phase regulator (42) comprises a first attenuator (421) and a first phase shifter (422), wherein an output port of the first attenuator (421) is connected to an input port of the first phase shifter (422);

the first attenuator (421) is configured to attenuate the first transmitting signal of which the amplitude-frequency characteristic has been regulated by the port network (41), so that an amplitude of the attenuated first transmitting signal is identical to that of the self-interference signal; and
the first phase shifter (422) is configured to perform phase-shift on the first transmitting signal which has been attenuated by the first attenuator (421), so that a phase of the phase-shifted first transmitting signal is inverse to that of the self-interference signal.

4. The device according to claim 1, wherein
the first amplitude-phase regulator (42) comprises a first phase shifter and a first attenuator, wherein an output port of the first phase shifter is connected to an input port of the first attenuator;

the first phase shifter is configured to perform the phase-shift on the first transmitting signal of which the amplitude-frequency characteristic has been regulated by the port network, so that a phase of the phase-shifted first transmitting signal is inverse to that of the self-interference signal; and

the first attenuator is configured to attenuate the first transmitting signal which has been phase-shifted by the first phase shifter, so that an amplitude of the attenuated first transmitting signal is identical to that of the self-interference signal.

5. The device according to claim 1 or claim 2, wherein
the port network (41) comprises at least one resistor inductor capacitor RLC circuit, wherein in case that number of the RLC circuits is larger than or equal to two, the RLC circuits are connected in series, the at least one RLC circuit comprises at least one resistor, at least one capacitor and at least one inductor, and the at least one resistor, the at least one capacitor, and the at least one inductor are connected in parallel and

the port network (41) is further configured to regulate, based on the amplitude-frequency characteristic of the self-interference signal, a phase of the first transmitting signal through the at least one RLC circuit.

6. The device according to claim 1, wherein
the port network (41) further comprises a fifth branch splitter (4114), a fifth branch delayer (4110), a fifth branch attenuator (4111), a sixth branch splitter (4115), a sixth branch delayer (4112) and a sixth branch attenuator (4113);

an input port of the fifth branch splitter (4114) is connected to an output port of the second branch delayer (4103), an output port of the fifth branch splitter (4114) is connected to an input port of the second branch attenuator (4104), the second branch attenuator (4104) is connected to the second branch delayer (4103) through the fifth branch splitter (4114), an output port of the fifth branch splitter (4114) is connected to an input port of the fifth branch delayer (4110), an output port of the fifth branch delayer (4110) is connected to an input port of the fifth branch attenuator (4111), an output port of the fifth branch attenuator (4111) is connected to the input port of the branch combiner (4101), an input port of the sixth branch splitter (4115) is connected to an output port of the third branch delayer (4105), an output port of the sixth branch splitter (4115) is connected to an input port of the third branch attenuator (4106), the third branch attenuator (4106) is connected to the third branch delayer (4105) through the sixth branch splitter (4115), the output port of the sixth branch splitter (4115) is connected to an input port of the sixth branch delayer (4112), an output port of sixth branch delayer (4112) is connected to an input port of the sixth branch attenuator (4113), and an output port of the sixth branch attenuator (4113) is connected to an input port of the branch combiner (4101);

the fifth branch splitter (4114) is configured to split the second branch signal which has been delayed by the second branch delayer (4102), to obtain a fifth branch signal;

the fifth branch delayer (4110) is configured to delay, based on a preset fifth branch delay factor, the fifth branch signal out of the fifth branch splitter (4114), wherein the preset fifth branch delay factor is set based on the self-interference signal;

the fifth branch attenuator (4111) is configured to attenuate, based on a preset fifth branch attenuation factor, the fifth branch signal which has been delayed by the fifth branch delayer (4110), wherein the preset fifth branch attenuation factor is set based on the self-interference signal;

the branch combiner (4101) is further configured to combine the first branch signal out of the second branch splitter (4102), the fifth branch signal which has been attenuated by the fifth branch attenuator (4111), and the second branch signal which has been attenuated by the second branch attenuator (4104) into the fourth branch signal;

the sixth branch splitter (4115) is configured to split the third branch signal which has been delayed by the third branch delayer (4107), to obtain a sixth branch signal;

the sixth branch delayer (4112) is configured to delay, based on a preset sixth branch delay factor, the sixth branch signal out of the sixth branch splitter (4115), wherein the preset sixth branch delay factor is set based on the self-interference signal;

the sixth branch attenuator (4113) is configured to attenuate, based on a preset sixth branch attenuation factor, the sixth branch signal which has been delayed by the sixth branch delayer (4112), wherein the preset sixth branch attenuation factor is set based on the self-interference signal;

the branch combiner (4101) is further configured to combine the third branch signal which has been attenuated by the third branch attenuator (4106), and the sixth branch signal which has been attenuated by the sixth branch attenuator (4113) into the fourth branch signal; and

a transmission direction of the fifth branch signal is the same as that of the second branch signal, and the transmission direction of the sixth branch signal is the same as that of the third branch signal.

7. The device according to claim 1, wherein the port network (41) further comprises a first branch attenuator (4108); wherein

an input port of the first branch attenuator (4108) is connected to an output port of the second branch splitter (4102), an output port of the first branch attenuator (4108) is connected to an input port of the branch combiner (4101), and the branch combiner (4101) is connected to the second branch splitter (4102) through the first branch attenuator (4108); and

the first branch attenuator (4108) is configured to attenuate, based on a preset first branch attenuation factor, the first branch signal, wherein the preset first branch attenuation factor is set based on the self-interference signal.

8. The device according to claim 1, wherein the port network (41) further comprises a fourth branch attenuator (4109); wherein

an input port of the fourth branch attenuator (4109) is connected to an output port of the branch combiner (4101), an output port of the fourth branch attenuator (4109) is connected to an input port of the third branch splitter (4107), and the branch combiner (4101) is connected to the third branch splitter (4107) through the fourth branch attenuator (4109); and

the fourth branch attenuator (4109) is configured to attenuate, based on a preset fourth branch attenuation factor, the fourth branch signal, wherein the preset fourth branch attenuation factor is set based on the self-interference signal.

9. The device according to any one of claims 1 to 8, wherein the self-interference cancellation device (4) further comprises a second splitter (45), a second amplitude-phase regulator (46) and a second combiner (47); wherein

an input port of the second splitter (45) is connected to an output port of the first splitter (44), an output port of the second splitter (45) is connected to an input port of the port network (41) and an input port of the second amplitude-phase regulator (46), an output port of the second amplitude-phase regulator (46) is connected to an input port of the second combiner (47), an output port of the first amplitude-phase regulator (42) is connected to an input port of the second combiner (47), and an output port of the second combiner (47) is connected to an input port of the first combiner (43);

the second splitter (45) is configured to split the first transmitting signal to obtain at least one second transmitting signal;

the second amplitude-phase regulator (46) is configured to perform amplitude-phase regulation on the second transmitting signal out of the second splitter (45); and

the second combiner (47) is configured to combine the second transmitting signal, which has been subjected to the amplitude-phase regulation performed by the second amplitude-phase regulator (46), into the first transmitting signal which has been subjected to the amplitude-phase regulation.

10. The device according to claim 9, wherein
the second amplitude-phase regulator (46) comprises a second attenuator (461) and a second phase shifter (462), and an output port of the second attenuator (461) is connected to an input port of the second phase shifter (462);

the second attenuator (461) is configured to attenuate the second transmitting signal out of the second splitter (45), so that an amplitude of the attenuated second transmitting signal reaches a preset amplitude; and

the second phase shifter (462) is configured to perform the phase-shift on the second transmitting signal which has been attenuated by the second attenuator (461), so that a phase of the phase-shifted second transmitting signal reaches a preset phase.

11. The device according to claim 9, wherein the second amplitude-phase regulator (46) comprises a second phase shifter and a second attenuator, and an output port of the second phase shifter is connected to an input port of the second attenuator;

the second phase shifter is configured to perform the phase-shift on the second transmitting signal out of the second splitter, so that a phase of the phase-shifted second transmitting signal reaches a preset phase; and

the second attenuator is configured to attenuate the second transmitting signal which has been phase-shifted by the second phase shifter, so that an amplitude of the attenuated second transmitting signal reaches a preset amplitude.

12. A self-interference cancellation method comprising:

splitting (201) a transmitting signal to obtain a first transmitting signal;

regulating (202) an amplitude-frequency characteristic of the first transmitting signal based on an amplitude-frequency characteristic of a self-interference signal, wherein the self-interference signal comprises an interference signal generated due to the transmitting signal being reflected from an antenna port;

performing (203), based on the self-interference signal, amplitude-phase regulation on the first transmitting signal of which the amplitude-frequency characteristic has been regulated; and

combining (204) the first transmitting signal, which has been subjected to the amplitude-phase regulation, with the self-interference signal; and

the self-interference cancellation method is characterize in that:

the regulating (202) the amplitude-frequency characteristic of the first transmitting signal based on the amplitude-frequency characteristic of the self-interference signal comprises:

splitting the first transmitting signal into a first branch signal and a second branch signal;

delaying the second branch signal based on a preset second branch delay factor, and attenuating the delayed second branch signal based on a preset second branch attenuation factor, wherein the preset second branch delay factor and the preset second branch attenuation factor are set based on the self-interference signal;

combining the first branch signal and the attenuated second branch signal into a fourth branch signal;

splitting the fourth branch signal to obtain a third branch signal;

delaying the third branch signal based on a preset third branch delay factor, and attenuating the delayed third branch signal based on a preset third branch attenuation factor, wherein the preset third branch delay factor and the preset third branch attenuation factor are set based on the self-interference signal;

combining the attenuated third branch signal into the fourth branch signal; and

outputting the fourth branch signal as the first transmitting signal of which the amplitude-frequency characteristic has been regulated; wherein

a transmission direction of the second branch signal is opposite to that of the first branch signal, transmission directions of the first branch signal, the third branch signal and the fourth branch signal are the same as that of the first transmitting signal.

13. The method according to claim 12, wherein the regulating (202) the amplitude-frequency characteristic of the first transmitting signal based on the amplitude-frequency characteristic of the self-interference signal comprises:

regulating the amplitude-frequency characteristic of the first transmitting signal based on the amplitude-frequency characteristic of the self-interference signal, so that the amplitude-frequency characteristic of the first transmitting signal is identical to the amplitude-frequency characteristic of the self-interference signal.

14. The method according to claim 12, wherein the performing (203), based on the self-interference signal, amplitude-phase regulation on the first transmitting signal of which the amplitude-frequency characteristic has been regulated, comprises:

attenuating the first transmitting signal of which the amplitude-frequency characteristic has been regulated, so that an amplitude of the attenuated first transmitting signal is identical to that of the self-interference signal; and

phase-shifting the attenuated first transmitting signal, so that a phase of the phase-shifted first transmitting signal is inverse to that of the self-interference signal.

**15.** The method according to claim 12, wherein the performing (203), based on the self-interference signal, amplitude-phase regulation on the first transmitting signal of which the amplitude-frequency characteristic has been regulated, comprises:

    phase-shifting the first transmitting signal of which the amplitude-frequency characteristic has been regulated, so that a phase of the phase-shifted first transmitting signal is inverse to that of the self-interference signal; and
    attenuating the phase-shifted first transmitting signal, so that an amplitude of the attenuated first transmitting signal is identical to that of the self-interference signal.

**16.** The method according to claim 12, wherein after the delaying the second branch signal based on the preset second branch delay factor, the method further comprises:

    splitting the delayed second branch signal to obtain a fifth branch signal;
    delaying the fifth branch signal based on a preset fifth branch delay factor, and attenuating the delayed fifth branch signal based on a preset fifth branch attenuation factor, wherein the preset fifth branch delay factor and the preset fifth branch attenuation factor are set based on the self-interference signal;

wherein the combining the first branch signal and the attenuated second branch signal into the fourth branch signal comprises:
combining the first branch signal, the delayed fifth branch signal and the attenuated second branch signal into the fourth branch signal;
wherein after the delaying the third branch signal based on the preset third branch delay factor, the method further comprises:

    splitting the delayed third branch signal to obtain a sixth branch signal; and
    delaying the sixth branch signal based on a preset sixth branch delay factor, and attenuating the delayed sixth branch signal based on a preset sixth branch attenuation factor, wherein the sixth branch delay factor and the sixth branch attenuation factor are set based on the self-interference signal; and

wherein the combining the attenuated third branch signal into the fourth branch signal comprises:

    combining the attenuated third branch signal and the attenuated sixth branch signal into the fourth branch signal; wherein
    a transmission direction of the fifth branch signal is the same as that of the second branch signal, a transmission direction of the sixth branch signal is the same as that of the third branch signal.

**17.** The method according to any one of claims 12 to 16, wherein
the self-interference signal further comprises a signal leaked by the transmitting signal at a transmitting end; and
the method further comprises:

    splitting the first transmitting signal to obtain at least one second transmitting signal;
    performing amplitude-phase regulation on the second transmitting signal; and
    combining the second transmitting signal, which has been subjected to the amplitude-phase regulation, into the first transmitting signal, which has been subjected to the amplitude-phase regulation, to cancel the signal leaked by the transmitting signal at the leaking port.

**18.** The method according to claim 17, wherein the performing the amplitude-phase regulation on the second transmitting signal comprises:

    attenuating the second transmitting signal, so that an amplitude of the attenuated second transmitting signal reaches a preset amplitude; and
    performing phase-shift on the attenuated second transmitting signal, so that a phase of the phase-shifted second transmitting signal reaches a preset phase.

**Patentansprüche**

**1.** Vorrichtung (4) zur Selbstinterferenzunterdrückung, aufweisend ein Port-Netzwerk (41), einen ersten Amplituden-Phasen-Regler (42), einen ersten Splitter (44) und einen ersten Kombinierer (43); wobei ein Ausgangsport des ersten Splitters (44) mit einem Eingangsport des Port-Netzwerks (41) verbunden ist, ein Eingangsport des ersten Amplituden-Phasen-Reglers (42) mit einem Ausgangsport des Port-Netzwerks (41) verbunden ist und ein Eingangsport des ersten Kombinierers (43) mit einem Ausgangsport des ersten Amplituden-Phasen-Reglers (42) verbunden ist;
der erste Splitter (44) zum Aufteilen eines Übertragungssignals zum Erhalten eines ersten Übertragungssignals konfiguriert ist;
das Port-Netzwerk (41) zum Regulieren, basierend auf einem Amplituden-Phasen-Kennzeichen eines Selbstinterferenzsignals, eines Amplituden-Frequenz-Kennzeichens des ersten Übertragungssignals aus dem ersten Splitter (44) konfiguriert ist;

der erste Amplituden-Phasen-Regler (42) zum Ausführen, basierend auf dem Selbstinterferenzsignal, von Amplituden-Phasen-Regulierung auf das erste Übertragungssignal, dessen Amplituden-Frequenz-Kennzeichen reguliert wurde, konfiguriert ist; und der erste Kombinierer (43) zum Kombinieren des Selbstinterferenzsignals mit dem ersten Übertragungssignal, das der Amplituden-Phasen-Regulierung unterzogen wurde, welche durch den ersten Amplituden-Phasen-Regler (42) ausgeführt wurde, konfiguriert ist; und wobei die Vorrichtung (4) zur Selbstinterferenzunterdrückung **dadurch gekennzeichnet ist, dass**:

das Port-Netzwerk (41) einen zweiten Verzweigungssplitter (4102), einen Verzweigungskombinierer (4101), einen zweiten Verzweigungsverzögerer (4103), einen zweiten Verzweigungsdämpfer (4104), einen dritten Verzweigungssplitter (4107), einen dritten Verzweigungsverzögerer (4105) und einen dritten Verzweigungsdämpfer (4106) aufweist;
ein Ausgangsport des zweiten Verzweigungssplitters (4102) mit einem Eingangsport des zweiten Verzweigungsverzögerers (4103) verbunden ist, ein Ausgangsport des zweiten Verzweigungssplitters (4102) mit einem Eingangsport des Verzweigungskombinierers (4101) verbunden ist, ein Ausgangsport des zweiten Verzweigungsverzögerers (4103) mit einem Eingangsport des zweiten Verzweigungsdämpfers (4104) verbunden ist, ein Ausgangsport des zweiten Verzweigungsdämpfers (4104) mit einem Eingangsport des Verzweigungskombinierers (4101) verbunden ist, ein Eingangsport des dritten Verzweigungssplitters (4107) mit einem Ausgangsport des Verzweigungskombinierers (4101) verbunden ist, ein Ausgangsport des dritten Verzweigungssplitters (4107) mit einem Eingangsport des dritten Verzweigungsverzögerers (4105) verbunden ist, ein Ausgangsport des dritten Verzweigungsverzögerers (4105) mit einem Eingangsport des dritten Verzweigungsdämpfers (4106) verbunden ist und ein Ausgangsport des dritten Verzweigungsdämpfers (4106) mit einem Eingangsport des Verzweigungskombinierers (4101) verbunden ist;
der zweite Verzweigungssplitter (4102) zum Aufteilen des ersten Übertragungssignals in ein erstes Verzweigungssignal und ein zweites Verzweigungssignal konfiguriert ist;
der zweite Verzweigungsverzögerer (4103) zum Verzögern, basierend auf einem voreingestellten zweiten Verzweigungsverzögerungsfaktor, des zweiten Verzweigungssignals aus dem zweiten Verzweigungssplitter konfiguriert ist, wobei der voreingestellte zweite Verzweigungsverzögerungsfaktor basierend auf dem Selbstinterferenzsignal eingestellt wird;
der zweite Verzweigungsdämpfer (4104) zum Dämpfen, basierend auf einem voreingestellten zweiten Verzweigungsdämpfungsfaktor, des zweiten Verzweigungssignals, das durch den zweiten Verzweigungsverzögerer (4103) verzögert wurde, konfiguriert ist, wobei der voreingestellte zweite Verzweigungsdämpfungsfaktor basierend auf dem Selbstinterferenzsignal eingestellt wird;
der Verzweigungskombinierer (4101) zum Kombinieren des ersten Verzweigungssignals aus dem zweiten Verzweigungssplitter (4102) und des zweiten Verzweigungssignals, das durch den zweiten Verzweigungsdämpfer (4104) gedämpft wurde, zu einem vierten Verzweigungssignal konfiguriert ist;
der dritte Verzweigungssplitter (4107) zum Aufteilen des vierten Verzweigungssignals, das durch den Verzweigungskombinierer (4101) kombiniert wurde, zum Erhalten eines dritten Verzweigungssignals konfiguriert ist;
der dritte Verzweigungsverzögerer (4105) zum Verzögern, basierend auf einem voreingestellten dritten Verzweigungsverzögerungsfaktor, des dritten Verzweigungssignals aus dem dritten Verzweigungssplitter konfiguriert ist, wobei der voreingestellte dritte Verzweigungsverzögerungsfaktor basierend auf dem Selbstinterferenzsignal eingestellt wird;
der dritte Verzweigungsdämpfer (4106) zum Dämpfen, basierend auf einem voreingestellten dritten Verzweigungsdämpfungsfaktor, des dritten Verzweigungssignals, das durch den dritten Verzweigungsverzögerer (4105) verzögert wurde, konfiguriert ist, wobei der voreingestellte dritte Verzweigungsdämpfungsfaktor basierend auf dem Selbstinterferenzsignal eingestellt wird;
der Verzweigungskombinierer (4101) ferner zum Kombinieren des dritten Verzweigungssignals, das durch den dritten Verzweigungsdämpfer (4106) gedämpft wurde, zum vierten Verzweigungssignal und zum Übertragen des vierten Verzweigungssignals als das erste Übertragungssignal, dessen Amplituden-Frequenz-Kennzeichen reguliert wurde, konfiguriert ist; und
eine Übertragungsrichtung des zweiten Verzweigungssignals entgegengesetzt zu jener des ersten Verzweigungssignals ist, wobei die Übertragungsrichtungen des ersten Verzweigungssignals, des dritten Verzweigungssignals und des vierten Verzweigungssignals dieselbe wie jene des ersten Übertragungssignals sind.

2. Vorrichtung nach Anspruch 1, wobei
das Port-Netzwerk (41) ferner zum derartigen Regulieren, basierend auf dem Amplituden-Frequenz-Kennzeichen des Selbstinterferenzsignals, des Amplituden-Frequenz-Kennzeichens des ersten Übertragungssignals, dass das Amplituden-Frequenz-Kennzeichen des ersten Übertragungssignals mit dem des Selbstinterferenzsignals identisch ist, konfiguriert ist.

3. Vorrichtung nach Anspruch 1, wobei
der erste Amplituden-Phasen-Regler (42) einen ersten Dämpfer (421) und einen ersten Phasenschieber (422) aufweist, wobei ein Ausgangsport des ersten Dämpfers (421) mit einem Eingangsport des ersten Phasenschiebers (422) verbunden ist;
der erste Dämpfer (421) zum derartigen Dämpfen des ersten Übertragungssignals, dessen Amplituden-Frequenz-Kennzeichen durch das Port-Netzwerk (41) reguliert wurde, dass eine Amplitude des gedämpften ersten Übertragungssignals identisch mit jener des Selbstinterferenzsignals ist, konfiguriert ist; und
der erste Phasenschieber (422) zum derartigen Ausführen von Phasenverschiebung auf das erste Übertragungssignal, das durch den ersten Dämpfer (421) gedämpft wurde, dass eine Phase des phasenverschobenen ersten Übertragungssignals invers zu jener des Selbstinterferenzsignals ist, konfiguriert ist.

4. Vorrichtung nach Anspruch 1, wobei
der erste Amplituden-Phasen-Regler (42) einen ersten Phasenschieber und einen ersten Dämpfer aufweist, wobei ein Ausgangsport des ersten Phasenschiebers mit einem Eingangsport des ersten Dämpfers verbunden ist;
der erste Phasenschieber zum derartigen Ausführen der Phasenverschiebung auf das erste Übertragungssignal, dessen Amplituden-Frequenz-Kennzeichen durch das Port-Netzwerk reguliert wurde, dass eine Phase des phasenverschobenen ersten Übertragungssignals invers zu jener des Selbstinterferenzsignals ist, konfiguriert ist; und
der erste Dämpfer zum derartigen Dämpfen des ersten Übertragungssignals, das durch den ersten Phasenschieber phasenverschoben wurde, dass eine Amplitude des gedämpften ersten Übertragungssignals identisch mit jener des Selbstinterferenzsignals ist, konfiguriert ist.

5. Vorrichtung nach Anspruch 1 oder 2, wobei
das Port-Netzwerk (41) mindestens einen Widerstand/Induktor/Kondensator-RLC-Kreis aufweist, wobei im Falle, dass die Anzahl der RLC-Kreise größer als oder gleich zwei ist, die RLC-Kreise in Reihe geschaltet sind, wobei der mindestens eine RLC-Kreis mindestens einen Widerstand, mindestens einen Kondensator und mindestens einen Induktor aufweist und der mindestens eine Widerstand, der mindestens eine Kondensator und der mindestens eine Induktor parallel geschaltet sind, und

das Port-Netzwerk (41) ferner zum Regulieren, basierend auf dem Amplituden-Frequenz-Kennzeichen des Selbstinterferenzsignals, einer Phase des ersten Übertragungssignals über den mindestens einen RLC-Kreis konfiguriert ist.

6. Vorrichtung nach Anspruch 1, wobei
das Port-Netzwerk (41) ferner einen fünften Verzweigungssplitter (4114), einen fünften Verzweigungsverzögerer (4110), einen fünften Verzweigungsdämpfer (4111), einen sechsten Verzweigungssplitter (4115), einen sechsten Verzweigungsverzögerer (4112) und einen sechsten Verzweigungsdämpfer (4113) aufweist;
ein Eingangsport des fünften Verzweigungssplitters (4114) mit einem Ausgangsport des zweiten Verzweigungsverzögerers (4103) verbunden ist, ein Ausgangsport des fünften Verzweigungssplitters (4114) mit einem Eingangsport des zweiten Verzweigungsdämpfers (4104) verbunden ist, der zweite Verzweigungsdämpfer (4104) über den fünften Verzweigungssplitter (4114) mit dem zweiten Verzweigungsverzögerer (4103) verbunden ist, ein Ausgangsport des fünften Verzweigungssplitters (4114) mit einem Eingangsport des fünften Verzweigungsverzögerers (4110) verbunden ist, ein Ausgangsport des fünften Verzweigungsverzögerers (4110) mit einem Eingangsport des fünften Verzweigungsdämpfers (4111) verbunden ist, ein Ausgangsport des fünften Verzweigungsdämpfers (4111) mit dem Eingangsport des Verzweigungskombinierers (4101) verbunden ist, ein Eingangsport des sechsten Verzweigungssplitters (4115) mit einem Ausgangsport des dritten Verzweigungsverzögerers (4105) verbunden ist, ein Ausgangsport des sechsten Verzweigungssplitters (4115) mit einem Eingangsport des dritten Verzweigungsdämpfers (4106) verbunden ist, der dritte Verzweigungsdämpfer (4106) über den sechsten Verzweigungssplitter (4115) mit dem dritten Verzweigungsverzögerer (4105) verbunden ist, der Ausgangsport des sechsten Verzweigungssplitters (4115) mit einem Eingangsport des sechsten Verzweigungsverzögerers (4112) verbunden ist, ein Ausgangsport des sechsten Verzweigungsverzögerers (4112) mit einem Eingangsport des sechsten Verzweigungsdämpfers (4113) verbunden ist und ein Ausgangsport des sechsten Verzweigungsdämpfers (4113) mit einem Eingangsport des Verzweigungskombinierers (4101) verbunden ist;
der fünfte Verzweigungssplitter (4114) zum Aufteilen des zweiten Verzweigungssignals, das durch den zweiten Verzweigungsverzögerer (4102) verzögert wurde, zum Erhalten eines fünften Verzweigungssignals konfiguriert ist;
der fünfte Verzweigungsverzögerer (4110) zum Verzögern, basierend auf einem voreingestellten fünften Verzweigungsverzögerungsfaktor, des fünften Verzweigungssignals aus dem fünften Verzweigungssplitter (4114) konfiguriert ist, wobei der voreingestellte fünfte Verzweigungsverzögerungsfaktor basierend auf dem Selbstinterferenzsignal eingestellt wird;

der fünfte Verzweigungsdämpfer (4111) zum Dämpfen, basierend auf einem voreingestellten fünften Verzweigungsdämpfungsfaktor, des fünften Verzweigungssignals, das durch den fünften Verzweigungsverzögerer (4110) verzögert wurde, konfiguriert ist, wobei der voreingestellte fünfte Verzweigungsdämpfungsfaktor basierend auf dem Selbstinterferenzsignal eingestellt wird;

der Verzweigungskombinierer (4101) ferner zum Kombinieren des ersten Verzweigungssignals aus dem zweiten Verzweigungssplitter (4102), des fünften Verzweigungssignals, das durch den fünften Verzweigungsdämpfer (4111) gedämpft wurde, und des zweiten Verzweigungssignals, das durch den zweiten Verzweigungsdämpfer (4104) gedämpft wurde, zum vierten Verzweigungssignal konfiguriert ist;

der sechste Verzweigungssplitter (4115) zum Aufteilen des dritten Verzweigungssignals, das durch den dritten Verzweigungsverzögerer (4107) verzögert wurde, zum Erhalten eines sechsten Verzweigungssignals konfiguriert ist;

der sechste Verzweigungsverzögerer (4112) zum Verzögern, basierend auf einem voreingestellten sechsten Verzweigungsverzögerungsfaktor, des sechsten Verzweigungssignals aus dem sechsten Verzweigungssplitter (4115) konfiguriert ist, wobei der voreingestellte sechste Verzweigungsverzögerungsfaktor basierend auf dem Selbstinterferenzsignal eingestellt wird;

der sechste Verzweigungsdämpfer (4113) zum Dämpfen, basierend auf einem voreingestellten sechsten Verzweigungsdämpfungsfaktor, des sechsten Verzweigungssignals, das durch den sechsten Verzweigungsverzögerer (4112) verzögert wurde, konfiguriert ist, wobei der voreingestellte sechste Verzweigungsdämpfungsfaktor basierend auf dem Selbstinterferenzsignal eingestellt wird;

der Verzweigungskombinierer (4101) ferner zum Kombinieren des dritten Verzweigungssignals, das durch den dritten Verzweigungsdämpfer (4106) gedämpft wurde, und des sechsten Verzweigungssignals, das durch den sechsten Verzweigungsdämpfer (4113) gedämpft wurde, zum vierten Verzweigungssignal konfiguriert ist; und

eine Übertragungsrichtung des fünften Verzweigungssignals dieselbe wie jene des sechsten Verzweigungssignals ist und die Übertragungsrichtung des sechsten Verzweigungssignals dieselbe wie jene des dritten Verzweigungssignals ist.

7. Vorrichtung nach Anspruch 1, wobei das Port-Netzwerk (41) ferner einen ersten Verzweigungsdämpfer (4108) aufweist; wobei

ein Eingangsport des ersten Verzweigungsdämpfers (4108) mit einem Ausgangsport des zweiten Verzweigungssplitters (4102) verbunden ist, ein Ausgangsport des ersten Verzweigungsdämpfers (4108) mit einem Eingangsport des Verzweigungskombinierers (4101) verbunden ist und der Verzweigungskombinierer (4101) über den ersten Verzweigungsdämpfer (4108) mit dem zweiten Verzweigungssplitter (4102) verbunden ist; und

der erste Verzweigungsdämpfer (4108) zum Dämpfen, basierend auf einem voreingestellten ersten Verzweigungsdämpfungsfaktor, des ersten Verzweigungssignals konfiguriert ist, wobei der voreingestellte erste Verzweigungsdämpfungsfaktor basierend auf dem Selbstinterferenzsignal eingestellt wird.

8. Vorrichtung nach Anspruch 1, wobei das Port-Netzwerk (41) ferner einen vierten Verzweigungsdämpfer (4109) aufweist; wobei

ein Eingangsport des vierten Verzweigungsdämpfers (4109) mit einem Ausgangsport des Verzweigungskombinierers (4101) verbunden ist, ein Ausgangsport des vierten Verzweigungsdämpfers (4109) mit einem Eingangsport des dritten Verzweigungssplitters (4107) verbunden ist und der Verzweigungskombinierer (4101) über den vierten Verzweigungsdämpfer (4109) mit dem dritten Verzweigungssplitter (4107) verbunden ist; und

der vierte Verzweigungsdämpfer (4109) zum Dämpfen, basierend auf einem voreingestellten vierten Verzweigungsdämpfungsfaktor, des vierten Verzweigungssignals konfiguriert ist, wobei der voreingestellte vierte Verzweigungsdämpfungsfaktor basierend auf dem Selbstinterferenzsignal eingestellt wird.

9. Vorrichtung nach einem der Ansprüche 1 bis 8, wobei die Vorrichtung (4) zur Selbstinterferenzunterdrückung ferner einen zweiten Splitter (45), einen zweiten Amplituden-Phasen-Regler (46) und einen zweiten Kombinierer (47) aufweist; wobei ein Eingangsport des zweiten Splitters (45) mit einem Ausgangsport des ersten Splitters (44) verbunden ist, ein Ausgangsport des zweiten Splitters (45) mit einem Eingangsport des Port-Netzwerks (41) und einem Eingangsport des zweiten Amplituden-Phasen-Reglers (46) verbunden ist, ein Ausgangsport des zweiten Amplituden-Phasen-Reglers (46) mit einem Eingangsport des zweiten Kombinierers (47) verbunden ist, ein Ausgangsport des ersten Amplituden-Phasen-Reglers (42) mit einem Eingangsport des zweiten Kombinierers (47) verbunden ist und ein Ausgangsport des zweiten Kombinierers (47) mit einem Eingangsport des ersten Kombinierers (43) verbunden ist; der zweite Splitter (45) zum Aufteilen des ersten Übertragungssignals zum Erhalten von mindestens einem zweiten Übertragungssignal konfiguriert ist;

der zweite Amplituden-Phasen-Regler (46) zum Ausführen von Amplituden-Phasen-Regulierung auf das zweite Übertragungssignal aus dem zweiten Splitter (45) konfiguriert ist; und

der zweite Kombinierer (47) zum Kombinieren des zweiten Übertragungssignals, das der Amplituden-Phasen-Regulierung unterzogen wurde, die durch den zweiten Amplituden-Phasen-Regler (46) ausgeführt wurde, zum ersten Übertragungssignal, das der Amplituden-Phasen-Regulierung unterzogen wurde, konfiguriert ist.

10. Vorrichtung nach Anspruch 9, wobei

der zweite Amplituden-Phasen-Regler (46) einen zweiten Dämpfer (461) und einen zweiten Phasenschieber (462) aufweist und ein Ausgangsport des zweiten Dämpfers (461) mit einem Eingangsport des zweiten Phasenschiebers (462) verbunden ist; der zweite Dämpfer (461) zum derartigen Dämpfen des zweiten Übertragungssignals aus dem zweiten Splitter (45), dass eine Amplitude des gedämpften zweiten Übertragungssignals eine voreingestellte Amplitude erreicht, konfiguriert ist; und der zweite Phasenschieber (462) zum derartigen Ausführen der Phasenverschiebung auf das zweite Übertragungssignal, das durch den zweiten Dämpfer (461) gedämpft wurde, dass eine Phase des phasenverschobenen zweiten Übertragungssignals eine voreingestellte Phase erreicht, konfiguriert ist.

11. Vorrichtung nach Anspruch 9, wobei

der zweite Amplituden-Phasen-Regler (46) einen zweiten Phasenschieber und einen zweiten Dämpfer aufweist und ein Ausgangsport des zweiten Phasenschieber mit einem Eingangsport des zweiten Dämpfers verbunden ist;

der zweite Phasenschieber zum derartigen Ausführen der Phasenverschiebung auf das zweite Übertragungssignal aus dem zweiten Splitter, dass eine Phase des phasenverschobenen zweiten Übertragungssignals eine voreingestellte Phase erreicht, konfiguriert ist; und

der zweite Dämpfer zum derartigen Dämpfen des zweiten Übertragungssignals, das durch den zweiten Phasenschieber phasenverschoben wurde, dass eine Amplitude des gedämpften zweiten Übertragungssignals eine voreingestellte Amplitude erreicht, konfiguriert ist.

12. Verfahren zur Selbstinterferenzunterdrückung, aufweisend:

Aufteilen (201) eines Übertragungssignals zum Erhalten eines ersten Übertragungssignals;
Regulieren (202) eines Amplituden-Frequenz-Kennzeichens des ersten Übertragungssignals basierend auf einem Amplituden-Phasen-Kennzeichen eines Selbstinterferenzsignals, wobei das Selbstinterferenzsignal ein Interferenzsignal aufweist, das aufgrund dessen erzeugt wird, dass das Übertragungssignal von einem Antennenport reflektiert wird;

Ausführen (203), basierend auf dem Selbstinterferenzsignal, von Amplituden-Phasen-Regulierung auf das erste Übertragungssignal, dessen Amplituden-Frequenz-Kennzeichen reguliert wurde; und

Kombinieren (204) des ersten Übertragungssignal, das der Amplituden-Phasen-Regulierung unterzogen wurde, mit dem Selbstinterferenzsignal; und

wobei das Verfahren zur Selbstinterferenzunterdrückung **dadurch gekennzeichnet ist, dass**:

das Regulieren (202) des Amplituden-Frequenz-Kennzeichens des ersten Übertragungssignals basierend auf dem Amplituden-Phasen-Kennzeichen des Selbstinterferenzsignals aufweist:

Aufteilen des ersten Übertragungssignals in ein erstes Verzweigungssignal und ein zweites Verzweigungssignal;
Verzögern des zweiten Verzweigungssignals basierend auf einem voreingestellten zweiten Verzweigungsverzögerungsfaktor und Dämpfen des verzögerten zweiten Verzweigungssignals basierend auf einem voreingestellten zweiten Verzweigungsdämpfungsfaktor, wobei der voreingestellte zweite Verzweigungsverzögerungsfaktor und der voreingestellte zweite Verzweigungsdämpfungsfaktor basierend auf dem Selbstinterferenzsignal eingestellt werden;
Kombinieren des ersten Verzweigungssignals und des gedämpften zweiten Verzweigungssignals zu einem vierten Verzweigungssignal;
Aufteilen des vierten Verzweigungssignals zum Erhalten eines dritten Verzweigungssignals;
Verzögern des dritten Verzweigungssignals basierend auf einem voreingestellten dritten Verzweigungsverzögerungsfaktor und Dämpfen des verzögerten dritten Verzweigungssignals basierend auf einem voreingestellten dritten Verzweigungsdämpfungsfaktor, wobei der voreingestellte dritte Verzweigungsverzögerungsfaktor und der voreingestellte dritte Verzweigungsdämpfungsfaktor basierend auf dem Selbstinterferenzsignal eingestellt werden;
Kombinieren des dritten Verzweigungssignals zum vierten Verzweigungssignal; und
Ausgeben des vierten Verzweigungssignals als das erste Übertragungssignal, dessen Amplituden-Frequenz-Kennzeichen reguliert wurde; wobei

eine Übertragungsrichtung des zweiten Verzweigungssignals entgegengesetzt zu jener des ersten Verzweigungssignals ist, wobei die Übertragungsrichtungen des ersten Verzweigungssignals, des dritten Verzweigungssignals und des vierten Verzweigungssignals dieselbe wie jene des ersten Übertragungssignals sind.

13. Verfahren nach Anspruch 12, wobei das Regulieren (202) des Amplituden-Frequenz-Kennzeichens des ersten Übertragungssignals basierend auf dem Amplituden-Phasen-Kennzeichen des Selbstinterferenzsignals aufweist:

derartiges Regulieren des Amplituden-Frequenz-Kennzeichens des ersten Übertragungssignals basierend auf dem Amplituden-Frequenz-Kennzeichen des Selbstinterferenzsignals, dass das Amplituden-Frequenz-Kennzeichen des ersten Übertragungssignals mit dem Amplituden-Frequenz-Kennzeichen des Selbstinterferenzsignals identisch ist.

14. Verfahren nach Anspruch 12, wobei das Ausführen (203), basierend auf dem Selbstinterferenzsignal, von Amplituden-Phasen-Regulierung auf das erste Übertragungssignal, dessen Amplituden-Frequenz-Kennzeichen reguliert wurde, aufweist:

derartiges Dämpfen des ersten Übertragungssignals, dessen Amplituden-Frequenz-Kennzeichen reguliert wurde, dass eine Amplitude des gedämpften ersten Übertragungssignals identisch mit jener des Selbstinterferenzsignals ist; und derartiges Phasenverschieben des ersten Übertragungssignals, dass eine Phase des phasenverschobenen ersten Übertragungssignals invers zu jener des Selbstinterferenzsignals ist.

15. Verfahren nach Anspruch 12, wobei das Ausführen (203), basierend auf dem Selbstinterferenzsignal, von Amplituden-Phasen-Regulierung auf das erste Übertragungssignal, dessen Amplituden-Frequenz-Kennzeichen reguliert wurde, aufweist:

derartiges Phasenverschieben des ersten Übertragungssignals, dessen Amplituden-Frequenz-Kennzeichen reguliert wurde, dass eine Phase des phasenverschobenen ersten Übertragungssignals invers zu jener des Selbstinterferenzsignals ist; und derartiges Dämpfen des ersten Übertragungssignals, dass eine Amplitude des gedämpften ersten Übertragungssignals identisch mit jener des Selbstinterferenzsignals ist.

16. Verfahren nach Anspruch 12, wobei, nach dem Verzögern des zweiten Verzweigungssignals basierend auf dem voreingestellten zweiten Verzweigungsverzögerungsfaktor, das Verfahren ferner aufweist:

Aufteilen des verzögerten zweiten Verzweigungssignals zum Erhalten eines fünften Verzweigungssignals; Verzögern des fünften Verzweigungssignals basierend auf einem voreingestellten fünften Verzweigungsverzögerungsfaktor und Dämpfen des verzögerten fünften Verzweigungssignals basierend auf einem voreingestellten fünften Verzweigungsdämpfungsfaktor, wobei der voreingestellte fünfte Verzweigungsverzögerungsfaktor und der voreingestellte fünfte Verzweigungsdämpfungsfaktor basierend auf dem Selbstinterferenzsignal eingestellt werden; wobei das Kombinieren des ersten Verzweigungssignals und des gedämpften zweiten Verzweigungssignals zum vierten Verzweigungssignal aufweist:

Kombinieren des ersten Verzweigungssignals, des verzögerten fünften Verzweigungssignals und des gedämpften zweiten Verzweigungssignals zum vierten Verzweigungssignal; wobei, nach dem Verzögern des dritten Verzweigungssignals basierend auf dem voreingestellten dritten Verzweigungsverzögerungsfaktors, das Verfahren ferner aufweist:

Aufteilen des verzögerten dritten Verzweigungssignals zum Erhalten eines sechsten Verzweigungssignals; und Verzögern des sechsten Verzweigungssignals basierend auf einem voreingestellten sechsten Verzweigungsverzögerungsfaktor und Dämpfen des verzögerten sechsten Verzweigungssignals basierend auf einem voreingestellten sechsten Verzweigungsdämpfungsfaktor, wobei der sechste Verzweigungsverzögerungsfaktor und der sechste Verzweigungsdämpfungsfaktor basierend auf dem Selbstinterferenzsignal eingestellt werden; und wobei das Kombinieren des gedämpften dritten Verzweigungssignals zum vierten Verzweigungssignal aufweist:

Kombinieren des gedämpften dritten Verzweigungssignals und des gedämpften sechsten Verzweigungssignals zum vierten Verzweigungssignal; wobei

eine Übertragungsrichtung des fünften Verzweigungssignals dieselbe wie jene des zweiten Verzweigungssignals ist, wobei eine Übertragungsrichtung des sechsten Verzweigungssignals dieselbe wie jene des dritten Verzweigungssignals ist.

17. Verfahren nach einem der Ansprüche 12 bis 16, wobei

das Selbstinterferenzsignal ferner ein Signal aufweist, das durch das Übertragungssignal an einem Übertragungsende freigesetzt wird; und das Verfahren ferner aufweist:

Aufteilen des ersten Übertragungssignals zum Erhalten von mindestens einem zweiten Übertragungssignals;

Ausführen von Amplituden-Phasen-Regulierung auf das zweite Übertragungssignal; und Kombinieren des zweiten Übertragungssignals, das der Amplituden-Phasen-Regulierung unterzogen wurde, zum ersten Übertragungssignal, das der Amplituden-Phasen-Regulierung unterzogen wurde, um das Signal, das durch das Übertragungssignal am Freisetzungsport freigesetzt wurde, zu unterdrücken.

18. Verfahren nach Anspruch 17, wobei das Ausführen der Amplituden-Phasen-Regulierung auf das zweite Übertragungssignal aufweist:

derartiges Dämpfen des zweiten Übertragungssignals, dass eine Amplitude des gedämpften zweiten Übertragungssignals eine voreingestellte Amplitude erreicht; und derartiges Ausführung der Phasenverschiebung auf das gedämpfte zweite Übertragungssignal, dass eine Phase des phasenverschobenen zweiten Übertragungssignals eine voreingestellte Phase erreicht.

**Revendications**

1. Dispositif d'annulation d'auto-interférence (4), comprenant un réseau de ports (41), un premier régulateur d'amplitude et de phase (42), un premier séparateur (44) et un premier combinateur (43) ; où un port de sortie du premier séparateur (44) est connecté à un port d'entrée du réseau de ports (41), un port d'entrée du premier régulateur d'amplitude et de phase (42) est connecté à un port de sortie du réseau de ports (41), et un port d'entrée du premier combinateur (43) est connecté à un port de sortie du premier régulateur d'amplitude et de phase (42) ; le premier séparateur (44) est configuré pour diviser un signal d'émission afin d'obtenir un premier signal d'émission ;
le réseau de ports (41) est configuré pour réguler, sur la base d'une caractéristique amplitude-fréquence d'un signal d'auto-interférence, une caractéristique amplitude-fréquence du premier signal d'émission sortant du premier séparateur (44) ;
le premier régulateur d'amplitude et de phase (42) est configuré pour effectuer, sur la base du signal d'auto-interférence, une régulation d'amplitude et de phase sur le premier signal d'émission dont la caractéristique amplitude-fréquence a été régulée ; et
le premier combinateur (43) est configuré pour combiner le signal d'auto-interférence avec le premier signal d'émission qui a été soumis à la régulation d'amplitude et de phase effectuée par le premier régulateur d'amplitude et de phase (42) ; et
le dispositif d'annulation d'auto-interférence (4) est **caractérisé en ce que** :

le réseau de ports (41) comprend un deuxième séparateur de branche (4102), un combinateur de branches (4101), un deuxième circuit à retard de branche (4103), un deuxième atténuateur de branche (4104), un troisième séparateur de branche (4107), un troisième circuit à retard de branche (4105) et un troisième atténuateur de branche (4106) ;
un port de sortie du deuxième séparateur de branche (4102) est connecté à un port d'entrée du deuxième circuit à retard de branche (4103), un port de sortie du deuxième séparateur de branche (4102) est connecté à un port d'entrée du combinateur de branches (4101), un port de sortie du deuxième circuit à retard de branche (4103) est connecté à un port d'entrée du deuxième atténuateur de branche (4104), un port de sortie du deuxième atténuateur de branche (4104) est connecté à un port d'entrée du combinateur de branches (4101), un port d'entrée du troisième séparateur de branche (4107) est connecté à un port de sortie du combinateur de branches (4101), un port de sortie du troisième séparateur de branche (4107) est connecté à un port d'entrée du troisième circuit à retard de branche (4105), un port de sortie du troisième circuit à retard de branche (4105) est connecté à un port d'entrée du troisième atténuateur de branche (4106), et un port de sortie du troisième atténuateur de branche (4106) est connecté à un port d'entrée du combinateur de branches (4101) ;
le second circuit séparateur de branche (4102) est configuré pour diviser le premier signal d'émission en un premier signal de branche et un deuxième signal de branche ;
le deuxième circuit à retard de branche (4103) est configuré pour retarder, sur la base d'un deuxième facteur de retard de branche prédéfini, le deuxième signal de branche sortant du deuxième séparateur de branche, dans lequel le deuxième facteur de retard de branche prédéfini est établi sur la base du signal d'auto-interférence ;

le second atténuateur de branche (4104) est configuré pour atténuer, sur la base d'un deuxième facteur d'atténuation de branche prédéfini, le deuxième signal de branche qui a été retardé par le deuxième circuit à retard de branche (4103), dans lequel le deuxième facteur d'atténuation de branche prédéfini est établi sur la base du signal d'auto-interférence ;

le combinateur de branches (4101) est configuré pour combiner le premier signal de branche sortant du deuxième séparateur de branche (4102) et le deuxième signal de branche qui a été atténué par le deuxième atténuateur de branche (4104) en un quatrième signal de branche ;

le troisième diviseur de branche (4107) est configuré pour diviser le quatrième signal de branche combiné par le combinateur de branches (4101) pour obtenir un troisième signal de branche ;

le troisième circuit à retard de branche (4105) est configuré pour retarder, sur la base d'un troisième facteur de retard de branche prédéfini, le troisième signal de branche sortant du troisième séparateur de branche, dans lequel le troisième facteur de retard de branche prédéfini est établi sur la base du signal d'auto-interférence ;

le troisième atténuateur de branche (4106) est configuré pour atténuer, sur la base d'un troisième facteur d'atténuation de branche prédéfini, le troisième signal de branche qui a été retardé par le troisième circuit à retard de branche (4105), dans lequel le troisième facteur d'atténuation de branche prédéfini est établi sur la base du signal d'auto-interférence ;

le combinateur de branches (4101) est en outre configuré pour combiner le troisième signal de branche qui a été atténué par le troisième atténuateur de branche (4106) dans le quatrième signal de branche, et émettre le quatrième signal de branche en tant que premier signal d'émission dont la caractéristique amplitude-fréquence a été régulée ; et

une direction de transmission du deuxième signal de branche est opposé à celle du premier signal de branche, les directions d'émission du premier signal de branche, du troisième signal de branche et du quatrième signal de branche sont les mêmes que celles du premier signal d'émission.

2. Dispositif selon la revendication 1, dans lequel

le réseau de ports (41) est en outre configuré pour réguler, sur la base de la caractéristique amplitude-fréquence du signal d'auto-interférence, une caractéristique amplitude-fréquence du premier signal d'émission, de sorte que la caractéristique amplitude-de-fréquence du premier signal d'émission soit identique à celle du signal d'auto-interférence.

3. Dispositif selon la revendication 1, dans lequel le premier régulateur d'amplitude et phase (42) comprend un premier atténuateur (421) et un premier déphaseur (422), dans lequel un port de sortie du premier atténuateur (421) est connecté à un port d'entrée du premier déphaseur (422),

le premier atténuateur (421) est configuré pour atténuer le premier signal d'émission dont la caractéristique amplitude-fréquence a été régulée par le réseau de ports (41), de sorte qu'une amplitude du premier signal d'émission atténué soit identique à celle du signal d'auto-interférence ; et

le premier déphaseur (422) est configuré pour effectuer un déphasage sur le premier signal d'émission qui a été atténué par le premier atténuateur (421), de sorte qu'une phase du premier signal d'émission déphasé est inverse de celle du signal d'auto-interférence.

4. Dispositif selon la revendication 1, dans lequel le premier régulateur d'amplitude et de phase (42) comprend un premier déphaseur et un premier atténuateur, dans lequel un port de sortie du premier déphaseur est connecté à un port d'entrée du premier atténuateur,

le premier déphaseur est configuré pour effectuer le déphasage sur le premier signal d'émission dont la caractéristique amplitude-fréquence a été régulée par le réseau de ports, de sorte qu'une phase du premier signal d'émission déphasé est inverse de celle du signal d'auto-interférence ; et

le premier atténuateur est configuré pour atténuer le premier signal d'émission déphasé par le premier déphaseur, de sorte qu'une amplitude du premier signal d'émission atténué soit identique à celle du signal d'auto-interférence.

5. Dispositif selon la revendication 1 ou 2, dans lequel le réseau de ports (41) comprend au moins un circuit RLC à résistance, inductance, condensateur, dans lequel, dans le cas où le nombre de circuits RLC est supérieur ou égal à deux, les circuits RLC sont connectés en série, le ou les circuits RLC comprennent au moins une résistance, au moins un condensateur et au moins une inductance, et la ou les résistances, le ou les condensateurs et l'inductance ou les inductances sont connectés en parallèle et

le réseau de ports (41) est en outre configuré pour réguler, en fonction de la caractéristique amplitude-fréquence du signal d'auto-interférence, une phase du premier signal d'émission à travers le ou les circuits RLC.

6. Dispositif selon la revendication 1, dans lequel le réseau de ports (41) comprend en outre un cinquième séparateur de branche (4114), un cinquième circuit à retard de branche (4110) un cinquième atténuateur de branche (4111), un sixième séparateur de branche (4115), un sixième circuit à retard de branche (4112) et un sixième atténuateur de branche (4113) ;

un port d'entrée du cinquième séparateur de branche (4114) est connecté à un port de sortie du deuxième circuit à retard de branche (4103), un port de sortie du cinquième séparateur de branche (4114) est connecté à un port d'entrée du deuxième atténuateur de branche (4104), le deuxième atténuateur de branche (4104) est connecté au deuxième circuit à retard de branche (4103) par l'intermédiaire du cinquième séparateur de branche (4114), un port de sortie du cinquième séparateur de branche (4114) est connecté à un port d'entrée du cinquième circuit à retard de branche (4110), un port de sortie du cinquième circuit à retard de branche (4110) est connecté à un port d'entrée du cinquième atténuateur de branche (4111), un port de sortie du cinquième atténuateur de branche (4111) est connecté à un port d'entrée du combinateur de branches (4101), un port d'entrée du sixième séparateur de branche (4115) est connecté à un port de sortie du troisième circuit à retard de branche (4105), un port de sortie du sixième séparateur de branche (4115) est connecté à un port d'entrée du troisième atténuateur de branche (4106), le troisième atténuateur de branche (4106) est connecté au troisième circuit à retard de branche (4105) par l'intermédiaire du sixième séparateur de branche (4115), le port de sortie du sixième séparateur de branche (4115) est connecté à un port d'entrée du sixième circuit à retard de branche (4112), un port de sortie du sixième circuit à retard de branche (4112) est connecté à un port d'entrée du sixième atténuateur de branche (4113), et un port de sortie du sixième atténuateur de branche (4113) est connecté à un port d'entrée du combinateur de branches (4101) ;

le cinquième diviseur de branche (4114) est configuré pour diviser le deuxième signal de branche qui a été retardé par le deuxième circuit à retard de branche (4102), pour obtenir un cinquième signal de branche ;

le cinquième circuit à retard de branche (4110) est configuré pour retarder, sur la base d'un cinquième facteur de retard de branche prédéfini, le cinquième signal de branche sortant du cinquième séparateur de branche (4114), dans lequel le cinquième facteur de retard de branche prédéfini est établi sur la base du signal d'auto-interférence ;

le cinquième atténuateur de branche (4111) est configuré pour atténuer, sur la base d'un cinquième facteur d'atténuation de branche prédéfini, le cinquième signal de branche qui a été retardé par le cinquième circuit à retard de branche (4110), dans lequel le cinquième facteur d'atténuation de branche prédéfini est établi sur la base du signal d'auto-interférence ;

le combinateur de branches (4101) est en outre configuré pour combiner le premier signal de branche sortant du deuxième séparateur de branche (4102), le cinquième signal de branche qui a été atténué par le cinquième atténuateur de branche (4111), et le deuxième signal de branche qui a été atténué par le deuxième atténuateur de branche (4104) pour obtenir le quatrième signal de branche ;

le sixième séparateur de branche (4115) est configuré pour diviser le troisième signal de branche qui a été retardé par le troisième circuit à retard de branche (4107), pour obtenir un sixième signal de branche ;

le sixième circuit à retard de branche (4112) est configuré pour retarder, sur la base d'un sixième facteur de retard de branche prédéfini, le sixième signal de branche sortant du sixième séparateur de branche (4115), dans lequel le sixième facteur de retard de branche prédéfini est établi sur la base du signal d'auto-interférence ;

le sixième atténuateur de branche (4113) est configuré pour atténuer, sur la base d'un sixième facteur d'atténuation de branche prédéfini, le sixième signal de branche qui a été retardé par le sixième circuit à retard de branche (4112), dans lequel le sixième facteur d'atténuation de branche prédéfini est établi sur la base du signal d'auto-interférence ;

le combinateur de branches (4101) est en outre configuré pour combiner le troisième signal de branche qui a été atténué par le troisième atténuateur de branche (4106), et le sixième signal de branche qui a été atténué par le sixième atténuateur de branche (4113) pour obtenir le quatrième signal de branche ; et

une direction d'émission du cinquième signal de branche est la même que celle du deuxième signal de branche, et la direction d'émission du sixième signal de branche est la même que celle du troisième signal de branche.

7. Dispositif selon la revendication 1, dans lequel le réseau de ports (41) comprend en outre un premier atténuateur de branche (4108) ; où

un port d'entrée du premier atténuateur de branche (4108) est connecté à un port de sortie du deuxième séparateur de branche (4102), un port de sortie du premier atténuateur de branche (4108) est connecté à un port d'entrée du combinateur de branches (4101), et le combinateur de branches (4101) est connecté au deuxième séparateur de branche (4102) par l'intermédiaire du premier atténuateur de branche (4108) ;

le premier atténuateur de branche (4108) est configuré pour atténuer, sur la base d'un premier facteur d'atténuation de branche prédéfini, le premier signal de branche, dans lequel le premier facteur d'atténuation de branche prédéfini est établi sur la base du signal d'auto-interférence.

8. Dispositif selon la revendication 1, dans lequel le réseau de ports (41) comprend en outre un quatrième atténuateur de branche (4109) ; où

un port d'entrée du quatrième atténuateur de branche (4109) est connecté à un port de sortie du combinateur de branches (4101), un port de sortie du quatrième atténuateur de branche (4109) est connecté à un port d'entrée du troisième séparateur de branche (4107), et le combinateur de branches (4101) est connecté au troisième séparateur de branche (4107) par l'intermédiaire du quatrième atténuateur de branche (4109) ; et

le quatrième atténuateur de branche (4109) est configuré pour atténuer, sur la base d'un quatrième facteur d'atténuation de branche prédéfini, le quatrième signal de branche, dans lequel le quatrième facteur d'atténuation de branche prédéfini est établi sur la base du signal d'auto-interférence.

9. Dispositif selon l'une quelconque des revendications 1 à 8, dans lequel le dispositif d'annulation d'auto-interférence (4) comprend en outre un second séparateur (45), un second régulateur d'amplitude et de phase (46) et un second combinateur (47) ; où

un port d'entrée du second séparateur (45) est connecté à un port de sortie du premier séparateur (44), un port de sortie du second séparateur (45) est connecté à un port d'entrée du réseau de ports (41) et à un port d'entrée du second régulateur d'amplitude et de phase (46), un port de sortie du second régulateur d'amplitude et de phase (46) est connecté à un port d'entrée du second combinateur (47), un port de sortie du premier régulateur d'amplitude et de phase (42) est connecté à un port d'entrée du second combinateur (47), et un port de sortie du second combinateur (47) est connecté à un port d'entrée du premier combinateur (43) ;

le second séparateur (45) est configuré pour diviser le premier signal d'émission pour obtenir au moins un second signal d'émission ;

le second régulateur d'amplitude et de phase (46) est configuré pour effectuer une régulation d'amplitude et de phase sur le second signal d'émission en provenance du second séparateur (45) ; et

le second combinateur (47) est configuré pour combiner le second signal d'émission qui a été soumis à la régulation d'amplitude et de phase effectuée par le second régulateur d'amplitude et de phase (46), dans le premier signal d'émission qui a été soumis à la régulation d'amplitude et de phase.

10. Dispositif selon la revendication 9, dans lequel le second régulateur d'amplitude et phase (46) comprend un second atténuateur (461) et un second déphaseur (462), et un port de sortie du second atténuateur (461) est connecté à un port d'entrée du second déphaseur (462) ;

le second atténuateur (461) est configuré pour atténuer le second signal d'émission du second séparateur (45), de sorte qu'une amplitude du second signal d'émission atténué atteigne une amplitude prédéterminée ; et

le second déphaseur (462) est configuré pour effectuer le déphasage sur le second signal d'émission qui a été atténué par le second atténuateur (461), de sorte qu'une phase du second signal d'émission déphasé atteigne une phase prédéterminée.

11. Dispositif selon la revendication 9, dans lequel le second régulateur d'amplitude et de phase (46) comprend un second déphaseur et un second atténuateur, et un port de sortie du second déphaseur est connecté à un port d'entrée du second atténuateur,

le second déphaseur est configuré pour effectuer le déphasage sur le second signal d'émission sortant du second séparateur, de sorte qu'une phase du second signal d'émission déphasé atteigne une phase prédéterminée ; et

le second atténuateur est configuré pour atténuer le second signal d'émission déphasé par le second déphaseur, de sorte qu'une amplitude du second signal d'émission atténué atteigne une amplitude prédéterminée.

12. Procédé d'annulation d'auto-interférence comprenant les étapes consistant à :

diviser (201) un signal d'émission afin d'obtenir un premier signal d'émission ;

réguler (202) la caractéristique amplitude-fréquence du premier signal d'émission sur la base d'une caractéristique amplitude-fréquence d'un signal d'auto-interférence, dans lequel le signal d'auto-interférence comprend un signal d'interférence généré du fait que le signal d'émission est réfléchi par un port d'antenne ;

effectuer (203), sur la base du signal d'auto-interférence, une régulation d'amplitude et de phase sur le premier signal d'émission dont la caractéristique amplitude-fréquence a été régulée ; et

combiner (204) le premier signal d'émission, qui a été soumis à la régulation d'amplitude et de phase, au signal d'auto-interférence ; et

le procédé d'annulation d'auto-interférence est **caractérisé en ce que** :

la régulation (202) de la caractéristique amplitude-fréquence du premier signal d'émission basée sur la caractéristique amplitude-fréquence du signal d'auto-interférence comprend les étapes consistant à :

diviser le premier signal d'émission en un premier signal de branche et un deuxième signal de branche ;

retarder le deuxième signal de branche sur la base d'un deuxième facteur de retard de branche prédéfini, et atténuer le deuxième signal de branche sur la base d'un deuxième facteur d'atténuation de branche prédéfini, dans lequel le deuxième facteur de retard de branche prédéfini et le deuxième facteur d'atténuation de branche prédéfini sont établis sur la base du signal d'auto-interférence ;

combiner le premier signal de branche et le deuxième signal de branche atténué pour former un quatrième signal de branche ;

diviser le quatrième signal de branche pour obtenir un troisième signal de branche ;

retarder le troisième signal de branche sur la base d'un troisième facteur de retard de branche prédéfini, et atténuer le troisième signal de branche retardé sur la base d'un troisième facteur d'atténuation de branche prédéfini, dans lequel le troisième facteur de retard de branche prédéfini et le troisième facteur d'atténuation de branche prédéfini sont établis sur la base du signal d'auto-interférence ;

combiner le troisième signal de branche atténué dans le quatrième signal de branche ; et

sortir le quatrième signal de branche en tant que premier signal d'émission dont la caractéristique amplitude-fréquence a été régulée ; où

une direction d'émission du deuxième signal de branche est opposée à celle du premier signal de branche, les directions d'émission du premier signal de branche, du troisième signal de branche et du quatrième signal de branche sont les mêmes que celles du premier signal d'émission.

13. Procédé selon la revendication 12, dans lequel la régulation (202) de la caractéristique amplitude-fréquence du premier signal d'émission basée sur la caractéristique amplitude-fréquence du signal d'auto-interférence comprend l'étape consistant à :
la régulation de la caractéristique amplitude-fréquence du premier signal d'émission basée sur la caractéristique amplitude-fréquence du signal d'auto-interférence, de sorte que la caractéristique amplitude-fréquence du premier signal d'émission soit identique à la caractéristique amplitude-fréquence du signal d'auto-interférence.

14. Procédé selon la revendication 12, dans lequel l'exécution (203), sur la base du signal d'auto-interférence, d'une régulation d'amplitude et de phase sur le premier signal d'émission dont la caractéristique amplitude-fréquence a été régulée, comprend les étapes consistant à :

atténuer le premier signal d'émission dont la caractéristique amplitude-fréquence a été régulée, de sorte qu'une amplitude du premier signal d'émission atténué soit identique à celle du signal d'auto-interférence ; et

déphaser le premier signal d'émission atténué, de sorte qu'une phase du premier signal d'émission déphasé est inverse de celle du signal d'auto-interférence.

15. Procédé selon la revendication 12, dans lequel l'exécution (203), sur la base du signal d'auto-interférence, d'une régulation d'amplitude et de phase sur le premier signal d'émission dont la caractéristique amplitude-fréquence a été régulée, comprend les étapes consistant à :

déphaser le premier signal d'émission dont la caractéristique amplitude-fréquence a été régulée, de sorte qu'une phase du premier signal d'émission déphasé est inverse de celle du signal d'auto-interférence ; et

atténuer le premier signal d'émission déphasé, de sorte qu'une amplitude du premier signal d'émission atténué soit identique à celle du signal d'auto-interférence.

16. Procédé selon la revendication 12, dans lequel après avoir retardé le deuxième signal de branche sur la base du deuxième facteur de retard de branche prédéfini, le procédé comprend en outre les étapes consistant à :

diviser le deuxième signal de branche pour obtenir un cinquième signal de branche ;

retarder le cinquième signal de branche sur la base d'un cinquième facteur de retard de branche prédéfini, et atténuer le cinquième signal de branche retardé sur la base d'un cinquième facteur d'atténuation de branche prédéfini, dans lequel le cinquième facteur de retard de branche prédéfini et le cinquième facteur d'atténuation de branche prédéfini sont établis sur la base du signal d'auto-interférence ;

dans lequel la combinaison du premier signal de branche et du deuxième signal de branche atténué pour former un quatrième signal de branche comprend l'étape consistant à :

combiner le premier signal de branche et le cinquième signal de branche retardé pour former le quatrième signal de branche ; dans lequel, après avoir retardé le troisième signal de branche sur la base du troisième facteur de retard de branche prédéfini, le procédé comprend en outre les étapes consistant à :

diviser le troisième signal de branche retardé pour obtenir un sixième signal de branche ; et
retarder le sixième signal de branche sur la base d'un sixième facteur de retard de branche prédéfini, et atténuer le sixième signal de branche retardé sur la base d'un sixième facteur d'atténuation de branche prédéfini, dans lequel le sixième facteur de retard de branche et le sixième facteur d'atténuation de branche sont établis sur la base du signal d'auto-interférence ; et
dans lequel la combinaison du troisième signal de branche atténué dans le quatrième signal de branche comprend l'étape consistant à :

combiner le troisième signal de branche atténué et le sixième signal de branche atténué pour former un quatrième signal de branche ; dans lequel
une direction d'émission du cinquième signal de branche est la même que celle du deuxième signal de branche, une direction d'émission du sixième signal de branche est la même que celle du troisième signal de branche.

17. Procédé selon l'une quelconque des revendications 12 à 16, dans lequel le signal d'auto-interférence comprend en outre un signal échappé du signal d'émission au niveau d'une extrémité d'émission ; et le procédé comprend en outre les étapes consistant à :

diviser le premier signal d'émission pour obtenir au moins un second signal d'émission ;
effectuer une régulation d'amplitude et de phase sur le second signal d'émission; et
combiner le second signal d'émission qui a été soumis à la régulation d'amplitude et de phase, pour former le premier signal d'émission qui a été soumis à la régulation d'amplitude et de phase, afin d'annuler le signal échappé du signal de transmission au port qui présente une fuite.

18. Procédé selon la revendication 17, dans lequel l'exécution de la régulation de l'amplitude et de phase sur le second signal d'émission comprend les étapes consistant à :

atténuer le second signal d'émission, de sorte qu'une amplitude du second signal d'émission atténué atteigne une amplitude prédéterminée ; et
effectuer un déphasage sur le second signal d'émission atténué, de sorte qu'une phase du second signal d'émission déphasé atteigne une phase prédéterminée.

Self-interference signal S2
reflected from an antenna
port

Circulator

Transmitting end

Receiving
end

Self-interference signal S1
leaked from the
transmitting end

**Fig. 1**

a self-interference cancellation device splits a transmitting
signal to obtain a first transmitting signal — 201

the self-interference cancellation device regulates the
amplitude-frequency characteristic of the first transmitting
signal based on the amplitude-frequency characteristic of the
self-interference signal — 202

the self-interference cancellation device performs, based on
the self-interference signal, amplitude-phase regulation on the
first transmitting signal of which the amplitude-frequency
characteristic has been regulated — 203

the self-interference cancellation device combines the first
transmitting signal, which has been subjected to the
amplitude-phase regulation, with the self-interference signal — 204

**Fig. 2**

a self-interference cancellation device splits a transmitting signal to obtain a first transmitting signal — 301

the self-interference cancellation device splits the first transmitting signal to obtain at least one second transmitting signal — 302

the self-interference cancellation device regulates an amplitude-frequency characteristic of the first transmitting signal based on an amplitude-frequency characteristic of the self-interference signal — 304

the self-interference cancellation device performs amplitude-phase regulation on the second transmitting signal — 303

the self-interference cancellation device performs, based on the self-interference signal, amplitude-phase regulation on the first transmitting signal of which the amplitude-frequency characteristic has been regulated — 305

the self-interference cancellation device combines the second transmitting signal, which has been subjected to the amplitude-phase regulation, into the first transmitting signal which has been subjected to the amplitude-phase regulation — 306

the self-interference cancellation device combines the first transmitting signal, which has been subjected to the amplitude-phase regulation, with the self-interference signal — 307

**Fig. 3**

Antenna

Self-interference cancellation device 4

44

Circulator

43

Transmitting signal → First splitter

S2

First combiner → Received signal

S1

Port network

First amplitude-phase regulator

41

42

**Fig. 4**

Antenna

Self-interference cancellation device 4

44

Circulator

43

Transmitting signal → First splitter

S2

First combiner → Received signal

461 462 S1 46

Second attenuator | Second phase shifter

Second amplitude-phase regulator

Second splitter

45

First amplitude-phase regulator

Port network | First attenuator | First phase shifter

second combiner

47

41 421 422

42

**Fig. 5**

41

a1 → Port network ← a2

Port 1 ○——→ | Port network | ←——○ Port 2

b1 → b2 →

**Fig. 6**

Port network 41   R1 [ ] L1 ( ) C1

**Fig.7**

4108 Second branch attenuator
4101 Branch combiner
4109 Fourth branch attenuator

Second branch splitter

4103 Second branch delayer

Second branch attenuator 4104

Fifth branch splitter 4114

Fifth branch delayer 4110

Fifth branch attenuator 4111

4102

Port network 41

Third branch attenuator 4106

Sixth branch splitter 4115

Sixth branch delayer 4112

Sixth branch attenuator 4113

4105 Third branch delayer

Fourth branch attenuator

Third branch splitter

4107

**Fig. 8**

39

9001

9011

Self-interference cancellation device

Processor

9013

Bus

Storage

Applications

Operating
system

Data

9012

**Fig. 9**

**EP 3 043 483 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090227213 A
- US 20120052892 A